# EUROPEAN PATENT APPLICATION

(11) **EP 2 267 585 A2**
(43) Date of publication of application: **29.12.2010**
(21) Application number: 09754920.8
(22) Date of filing: 31.03.2009
(51) Int. Cl.: G06F 3/033, G06F 3/03, G06F 3/041, G06F 3/01

(54) **DATA INPUT DEVICE**

(30) Priority: 31.03.2008 KR 20080029615; 12.11.2008 KR 20080112285
(71) Applicant: OH, Eui-Jin, Daejeon 301-150 (KR)
(72) Inventor: OH, Eui-Jin, Daejeon 301-150 (KR)
(74) Representative: Thacker, Darran Ainsley
(86) International application number: PCT/KR2009/001658
(87) International publication number: WO 2009/145455

(57) **Abstract**

There is provided a data input device comprising a predetermined sensing region in a terminal for an electronic apparatus. The data input device includes an input unit for sensing at least one of touch and pressure applied to a reference position that can be displaced in a sensing region and a plurality of first directing positions arranged around the reference position in a radial direction to generate an input signal corresponding to the touch or the pressure and a controller for determining a touch or pressure point of a finger or a touch or pressure direction from the input signal to extract data assigned to the input signal from a memory unit and to input the extracted data.

## Description

### Technical Field

The present invention relates to a data input device, and more particularly, to a data input device capable of distinguishing inputting touch and pressure and the direction of the touch or pressure and capable of effectively performing an input inward and outward and of improving convenience of a user.

### Background Arts

Recently, portable information apparatuses tend to be made small due to the developments of softwares, semiconductors, and information processing technologies. Accordingly, the importance of data input by various information apparatuses is increasing.

However, there exist many problems in inputting various characters or commands by such information apparatuses.

For example, there exist limitations on reducing the size of an input apparatus such as a keyboard used for a personal computer (PC) or a laptop so that it is difficult to make the information apparatuses small.

A touch screen method used for personal digital assistants (PDA) and a keypad method used for mobile telephones have low input speed and many erroneous inputs.

In order to have an information apparatus such as the above-described PC, laptop, and PDA or a mobile telephone input characters, numbers, or symbols at higher speed, it is necessary that one phoneme (character) be input by performing an input operation once.

When such an input system is applied to Hangeul, buttons or input keys for inputting no less than 24 characters need to be arranged in a portable information apparatus.

When a language to be input is English, Japanese, or another foreign language, more buttons or input keys are to be provided than in Hangeul.

In addition, as a portable terminal trends to realize the performance of a desktop PC, the portable terminal is expected to perform all of the input functions of the keyboard having various command keys (enter, space, shift keys, etc.) and symbol keys other than character input functions.

However, in the conventional inputting apparatus used for various information apparatuses, characters are assigned to input keys and the input keys are knocked or pressed by fingers to perform input.

Therefore, it is difficult to arrange no less than 24 finger-sized input keys in the portable terminal such as the mobile telephone in which an input key arrangement area is relatively small, which is the reason why it is difficult to make the keyboard small.

In particular, in the case of the mobile telephone, since no less than 24 Hangeul characters are commonly input by 12 buttons, a plurality of characters are inevitably arranged with overlap in one button.

Therefore, one character (phoneme) is frequently input by two or three operations. As a result, input time increases and many erroneous inputs are generated.

In addition, an input method is very complicated so that it takes a long time to be accustomed to performing inputs.

In order to solve the above problems, in the case of inputting Hangeul, a character input method such as 'Cheon-Ji-In' in which predetermined characters are combined with each other to be input was suggested.

However, in the above method, since basic characters are combined with each other to generate a desired character, it is possible to reduce the number of input buttons to which characters are assigned. However, since input buttons are to be repeatedly pressed until a desired character is combined, input time increases.

In particular, in the above-described input apparatus, after a finger is moved to a predetermined input key, to which a mode converting function is assigned, to select the input key and to convert a mode, a movement is made to an input key, to which a corresponding character is assigned, to input the character, or after a predetermined input key is repeatedly selected to change a selecting position and to convert the mode, the input key, to which the corresponding character is assigned, is selected to input a desired character.

Therefore, many and complicated input operations are required until the desired character is input, input speed is reduced, and input correctness deteriorates.

In addition, technologies such as a keyboard that can be rolled to be portable and a virtual laser keyboard in which, when the image of a keyboard is projected onto a floor and an operation is performed as if an input is made to the keyboard by fingers, the positions of the fingers are sensed so that an input is performed are suggested.

However, since such input apparatuses are to be always carried and inputs can be made only when the input apparatuses are put on the floor, the input apparatuses cannot be applied to the portable information terminals that are to be carried by hands to make inputs during user's moving.

### Detailed Descriptions of Invention

### Technical Problems

The present invention has been made to provide a data input device capable of distinguishing touch, pressure, or the direction of touch or pressure to correctly input data in a small area.

The present invention has also been made to provide a data input device, in which it is not necessary to perform repeated inputs and it is possible to perform a touch input so that it is possible to rapidly input data and in which it is possible to prevent an erroneous input from being performed by a user when data are input due to a small movement range for inputting data so that it is possible to correctly input data.

The present invention has also been made to provide a data input device capable of inputting a large amount of data in a small area and capable of being applied to various information apparatuses to make the information apparatuses light and small.

The present invention has also been made to provide a data input device capable of maximize an input capacity to increase the amount of data that may be input and capable of easily performing text edition command inputs such as enter and space that are required for all of the character inputs and inputs such as numbers, symbols, and special characters.

### Technical Solutions

In order to achieve the foregoing and/or other aspects of the present invention, there is provided a data input device having a predetermined sensing region in a terminal device for an electronic apparatus, comprising a sensing input unit for sensing at least one of touch and pressure applied to a reference position that may be displaced in the sensing region and a plurality of first directing positions arranged around the reference position in a radial direction to generate an first input signal corresponding to the touch or the pressure, and a controller for determining a touch or pressure point of a finger or a touch or pressure direction from the first input signal to extract data assigned to the first input signal from a memory unit and to input the extracted data.

On the other hand, there is provided a data input device, comprising an input unit provided in a base of a terminal for an electronic apparatus to independently perform a first direction input, in which one of a plurality of directing positions spaced from a reference position and arranged around the reference position in a radial direction in a predetermined input radius is pressed, and a second direction input, in which one of the directing positions is pressed from the reference position to an outside, a first sensing unit for sensing the first direction input, a second sensing unit for sensing the second direction input, and a controller for extracting first data assigned to the first direction input performed in the directing positions from a memory unit when the first direction input is sensed and for extracting second data assigned to the second direction input performed in the directing positions from the memory unit when the second direction input is sensed, and for executing the first and the second data.

There is provided a data input device, comprising an input unit provided in a base of a terminal for an electronic apparatus to independently perform a first direction input, in which one of a plurality of directing positions spaced from a reference position and arranged around the reference position in a radial direction in a predetermined input radius is pressed, and a third direction input, in which one of the directing positions is pressed inward to the reference position, a first sensing unit for sensing the first direction input, a third sensing unit for sensing the third direction input, and a controller for extracting first data assigned to the first direction input performed in the directing positions from the memory unit when the first direction input is sensed and for extracting third data assigned to the third direction input performed in the directing positions from the memory unit when the third direction input is sensed, and for executing the first and the third data.

There is provided a data input device, comprising an input unit provided in a base of a terminal for an electronic apparatus to independently perform a first direction input, in which one of a plurality of directing positions spaced from a reference position and arranged around the reference position in a radial direction in a predetermined input radius is pressed, a second direction input, in which one of the directing positions is pressed from the reference position to a outside, and a third direction input, in which one of the directing positions is pressed inward toward the reference position, a first sensing unit for sensing the first direction input, a second sensing unit for sensing the second direction input, a third sensing unit for sensing the third direction input, and a controller for extracting first data assigned to the first direction input performed in the directing positions from a memory unit when the first direction input is sensed, for extracting second data assigned to the second direction input performed in the directing positions from the memory unit when the second direction input is sensed and for extracting third data assigned to the third direction input performed in the directing positions from the memory when the third direction input is sensed, and for executing the first to the third data.

### Advantageous Effects

Therefore, in the data input device according to the present invention, at least one input operation using a reference position and an directing position is used so that a large amount of data may be input in a small area and it is not necessary to perform repeated operations since continuous input operations are performed so that it is possible to prevent an erroneous operation from being performed by a user and to correctly input data.

In addition, since it is possible to minimize an input space so that it is possible to make a product small and slim, the data input device may be applied to terminals for various electronic apparatuses such as PDA, laptop and a portable mobile communication terminal, etc..

The data input device according to the present invention may conveniently input data due to simple constitution and using method and may be applied to various information apparatuses to make the information apparatuses light and small.

In addition, according to the present invention, since at least two among a plurality of direction inputs may be used to further input new characters, symbols, and numbers, etc., it is possible to extend an input capacity without limitations.

Therefore, since one phoneme may be input by one input operation performed like by a keyboard by an input interface of a small apparatus such as a portable terminal, at least 24 signals such as 24 Korean alphabets and 26 English alphabets may be input by one operation respectively.

### Brief Description of the Drawings

FIG. 1 is a front view illustrating an application example of a data input device according to the present invention;
FIG. 2 is a sectional view illustrating the constitution of an input unit according to the present invention;
FIG. 3 is a conceptual diagram illustrating a touch input and a pressure input performed by the input unit according to the present invention;
FIG. 4 is a conceptual diagram illustrating a vertical pressure input performed by the input unit according to the present invention;
FIG. 5 is a conceptual diagram illustrating a movement input performed by the input unit according to the present invention;
FIG. 6 is a conceptual diagram illustrating a second direction input performed by the input unit according to the present invention;
FIGs. 7 and 8 are conceptual diagrams illustrating horizontal pressure inputs performed by the input unit according to the present invention;
FIG. 9 is a conceptual diagram illustrating a lean movement input performed by the input unit according to the present invention;
FIG. 10 is a conceptual diagram illustrating a slope pressure input performed by the input unit according to the present invention;
FIGs. 11 to 13 are conceptual diagrams illustrating combination inputs performed by the input unit according to the present invention;
FIG. 14 is a view illustrating a method of determining a reference position and a first directing position in the input unit according to the present invention;
FIGs. 15 and 16 are views illustrating another constitution of the data input device according to the present invention;
FIGs. 17 and 18 are perspective views illustrating an inputting instrument unit according to the present invention;
FIG. 19 is a perspective view illustrating another embodiment of a terminal for an electronic apparatus in which the data input device according to the present invention is mounted;
FIG. 20 is a conceptual diagram illustrating the concept of the data input device according to the present invention;
FIG. 21 is a block diagram illustrating a separated-type data input device;
FIG. 22 is a view illustrating a method of realizing the separated-type data input device of FIG. 21;
FIG. 23 is a block diagram illustrating an integrated data input device;
FIG. 24 is a view illustrating a method of realizing the integrated data input device of FIG. 23;
FIG. 25 is a conceptual diagram illustrating another example of the concept of the embodiment of FIG. 20;
FIG. 26 is a conceptual diagram illustrating the concept of another embodiment of the data input device according to the present invention;
FIG. 27 is a conceptual diagram illustrating the concept of still another embodiment of the data input device according to the present invention;
FIG. 28 is a view illustrating another realizing method of the separated-type data input device;
FIGs. 29 to 31 are views illustrating another realizing method of the integrated-type data input device;
FIGs. 32 and 33 are views illustrating another realizing method of the data input device;
FIG. 34 is a conceptual diagram illustrating another concept of the data input device according to the present invention;
FIG. 35 is a conceptual diagram illustrating still another concept of the data input device according to the present invention;
FIGs. 36 to 38 are conceptual diagrams illustrating a realizing example of the data input device of FIG. 35; and
FIGs. 39 to 46 are conceptual diagrams illustrating still another concept of the data input device according to the present invention.

### Embodiments of Invention

Hereinafter, a data input device according to the present invention having the above constitutions will be described in detail with reference to the accompanying drawings. For reference, the components that do not have the same shape but have the same function are denoted by the same reference numeral.

The data input device according to the present invention includes, in a terminal for an electronic apparatus, first input units provided in the positions corresponding to a plurality of first directing positions spaced from a reference position and arranged around the reference position in a radial direction in a predetermined input region to perform a first direction input by performing at least one of touch and pressure in one of the first directing positions, a first sensing unit for sensing the first direction input, and a controller for extracting first data assigned to the first direction input performed in the first directing position from a memory unit when the first direction input is sensed, and for executing the extracted first data.

At this time, the first input unit includes at least one second directing positions spaced from the first directing position and arranged around the first directing position in a radial direction so that a second direction input, in which movement is made from the first directing position to one of the second directing positions, is performed to be independent of the first direction input. Here, the second direction input is sensed by a second sensing unit for sensing the second direction input. The controller extracts second data assigned to the second direction input performed in the second directing position from the memory unit when the second direction input is performed, and executes the second data.

The second directing positions may be inward direction directing positions provided from the first directing positions to the reference position, may be outward direction reference positions provided from the first directing positions to the opposite side of the reference position, and may be both of the above. In addition, the second directing positions may be provided in a clockwise direction or a counter clockwise direction, may be provided in a cross direction or a diagonal cross direction, and may be arranged to have different numbers and shapes at each of the first directing positions.

In this case, the first input units are respectively provided in each of the first directing positions, are pressed to perform the first direction input, and may be realized to have mechanical shapes such as keys that may be moved to or inclined toward the second directing positions. Here, the first input units have mechanical shapes due to the mechanical movements of the first input units. The first direction input and the second direction input performed by the first input units may be sensed by the first sensing unit and the second sensing unit to be processed in an electronic form.

In addition, the first input units may be realized in the electronic form such as a touch pad or a touch screen, which are provided in the first directing positions to perform touch, touch movement, or pressure and in which the first sensing unit and the second sensing unit sense the touch, the touch movement, or the pressure to perform the first or the second direction input.

Here, when the first input units are formed of the touch pad or the touch screen, the first sensing unit and the second sensing unit are not separated from each other but are provided in the form of one sensing unit or may be provided to be integrated with the first input units. Since the touch pad or the touch screen are only one example of the constitution in which the touch or the pressure applied by a finger to the first input unit may be sensed, if the same function may be performed, the first input unit may be replaced by another constitution than the touch pad or the touch screen.

In addition, the first input unit may be formed of another constitution than the touch pad or the touch screen and the first sensing unit and the second sensing unit may be formed of touch sensors, optical sensors, or pressure sensors to sense the touch, the touch movement, or the pressure of the finger.

On the other hand, in the data input device according to the present invention, second input units may be further provided regardless of the first input units.

The second input units are provided inside the first input units around the reference position. The second input units perform a third direction input, in which movement is made toward one of the first directing positions. Therefore, the data input device according to the present invention further includes a third sensing unit for sensing the third direction input performed by the second input units.

Like the first input unit, the second input unit may be realized by the key, the touch pad, or the touch screen. Therefore, in accordance with the realized forms of the first input unit and the second input unit, the data input device according to the present invention may have four types. In the first type, both of the first input unit and the second input unit are formed of the keys. In the second type, the first input unit is formed of the keys and the second input unit is formed of the touch pad or the touch screen. In the third type, the first input unit is formed of the touch pad or the touch screen and the second input unit is formed of the keys. In the fourth type, both of the first input unit and the second input unit are formed of the touch pad or the touch screen.

At this time, when both of the first input unit and the second input unit are formed of the touch pad or the touch screen, the first input unit and the second input unit may be provided to be integrated without a boundary between each other. In such a type, since a reference position may be generated on the basis of the touch position of the finger at the touch position of the finger, regardless of the position where the finger firstly touches in an input region, the first to the third direction inputs may be performed. In addition, in this type, when the finger moves so that the position of the finger in the input region is changed, the reference position may be also changed. In this case, the reference position is determined by sensing the center of the touch area of the finger.

In addition, the numbers of first and second directing positions, in which the first to the third direction inputs are performed, may be different from each other. The positions of the first directing positions may be different from the positions of the second directing positions. That is, the number of first directing positions may be 8 and the number of second directing positions may be 4. In addition, the first direction input may be performed in all of the first directing positions, however, the third direction input may not be performed in a specific first directing position.

On the other hand, in the present specification, an expression "data" include functional commands such as numbers, symbols, direction movements, spacing, confirmation, and canceling as well as characters in narrow meaning in various languages such as Korean characters, English characters, or Japanese characters. The "data" may be divided into first data, second data, and third data to be arranged in the data input device according to the present invention. Therefore, the first data and the others do not mean merely characters but include the above-described numbers, symbols, and functional commands.

Then, various embodiments of the above-described data input device will be described.

### <First Embodiment>

### Basic Constitution

In the present embodiment, in a data input device, both of a first input unit and a second input unit are realized by a touch screen. That is, the data input device according to the present embodiment, in which a predetermined input region 50 is provided in a terminal for an electronic apparatus so that the operation of a finger is sensed, includes a first input unit 10 for sensing at least one of touch and pressure performed in a reference position S that may be displaced in the input region and a plurality of first directing positions D1 arranged around the reference position S in a radial direction in the input region to perform a first direction input corresponding to the touch or the pressure, a first sensing unit for sensing the first direction input, and a controller (not shown) for determining the touch or pressure point or the touch or pressure direction of a finger based on a sensing signal from the first sensing unit to extract first data assigned to the corresponding touch or pressure from a memory unit (not shown) and to input the extracted first data.

At this time, the first input unit may perform a second direction input, in which movement is made from the first directing positions to at least one second directing positions arranged around the first directing positions in a radial direction. In this case, a second sensing unit for sensing the second direction input is further provided. When the second direction input is performed, the controller extracts second data assigned to the second directing positions from the memory unit to input the extracted second data.

In addition, the data input device is provided to be integrated with the first input unit to make the reference position center around and may further include a second input unit that may perform a third direction input, in which movement is made to the first directing positions. In addition, the data input device may include a third sensing unit that may sense the third direction input in the second input unit.

However, according to the present embodiment, since the first input unit and the second input unit are provided to be integrated with each other, the first input unit and the second input unit are referred to as an input unit. Since divided sensing units for sensing the direction inputs are not provided on the touch screen, in the present embodiment, the first to the third sensing units are referred to as a sensing unit.

The above-described data input device may be realized on the touch screen. However, if the terminal for an electronic apparatus may process an input by sensing the touch or the pressure of a finger or a tool, the data input device is not limited to the touch screen.

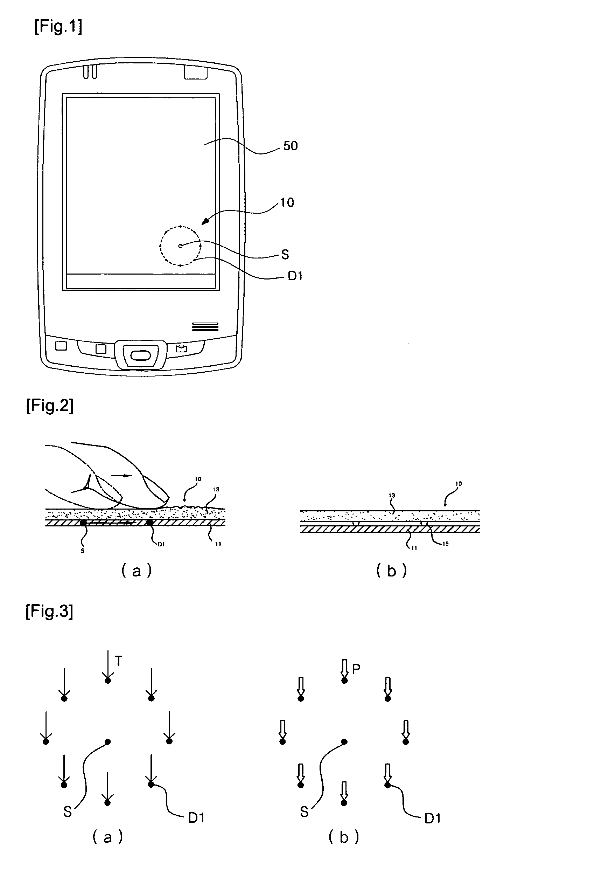

FIG. 1 is an application example of the data input device according to the present invention, which may be realized on the touch screen like the PDA. When the data input device according to the present invention is realized in the input region 50 of the touch screen, the reference position S is realized by a small point for displaying a reference on the screen. The first directing positions D1 are formed around the reference position S in a uniform region in a radial direction.

When the reference position S is realized by the small point, the point may be circular, polygonal, etc. and may function as a reference that a user may recognize.

In the touch screen type, the reference position S is realized by the small point that the user may recognize, and may setup to be transparent so that the user may check the screen at the moment of the input and that an additional space on the screen for performing an input is not necessary, and therefore, the screen is effectively used.

In addition, the input unit 10 in which the reference position S is provided may be moved on the screen. It is desirable that the input unit 10 is moved to a desired point by dragging the input unit 10 after a specific signal is input. At this time, the specific signal is clicking the reference position S or the first directing positions D1 twice within a predetermined time. The input unit 10 may be moved after the specific signal is input so that a common data input may not be prohibited.

In addition, in the data input device, a standby region (not shown), to which the reference position S may be moved, may exist on one side of the screen. At this time, when the reference position S is moved to the standby region, the region of the first directing positions D1 may disappear. When the reference position S is moved to deviate from the standby region, the region of the first directing positions D1 may appear. That is, when the input unit 10 is not required, the standby region may exist on one side of the screen like in a common window environment and the region of the first directing positions D1 may disappear or appear.

In addition, the region of the first directing positions D1 may disappear in the standby region. The reference position S may be moved or the standby region may be touched or rubbed twice so that the region of the first directing positions D1 can appear.

In the conventional PDA, since an additional screen for a touch input is additionally formed and a button region like an input key region exists on the screen, adjacent button regions besides a desired button are touched when buttons are touched so that erroneous inputs are generated and that a uniform region, in which the buttons are formed, covers another window, and therefore, inconvenience of use is incurred. However, as described above, according to the present invention, an input may be performed without covering the screen by setting a minimum region and the transparent region of the first directing positions D1.

In addition, the data input device according to the present invention may be used for various apparatuses that use a touch screen as well as for the illustrated PDA so that the data input device may be applied to various information apparatuses.

On the other hand, the constitutions of the input unit 10 for realizing a touch input T, a pressure input P, and movement inputs M01, MO2, MI1, MI2, PM1, and PM2 to be mentioned hereinafter will be described with reference to FIG. 2.

As illustrated in (a) of FIG. 2, the input unit 10 may be provided on a sensing unit 11 such as a touch screen. In detail, the input unit 10 touches or presses the reference position S and the first and the second directing positions D1 and D2 displayed on the sensing unit 11 to perform the touch input T and the pressure input P. In addition, as illustrated in (a) of FIG. 2, the movement input M may be performed by the movement from the reference position S to the first directing position D1. At this time, the input unit 10 senses the point of touch or pressure, or the direction or the distance of the movement in a state where touch or pressure is applied and generates an input signal corresponding to the sensed result.

Thus generated input signal is transmitted to the controller and the controller extracts data assigned to the input signal from the memory unit to input the extracted data.

A return unit 13 formed of an elastic material and arranged on the sensing unit 11 is further provided in the input unit 10 so that the input unit 10 may return to an original position after the touch input T, the pressure input P, and the movement input are performed. It is desirable that the return unit 13 is manufactured to be transparent so that the reference position S or the first and the second directing positions D1 and D2 displayed on the sensing unit 11 can be recognized from the outside.

On the other hand, as illustrated in (b) of FIG. 2, the input unit 10 may include the sensing unit 11 such as the touch screen, the above-described return unit 13, and a plurality of touch protrusions 15 arranged between the sensing unit 11 and the return unit 13. An input to the input unit 10 is performed by assigning the touch protrusions 15 to the reference position S or the first and the second directing positions D1 and D2 and by touching or pressing the touch protrusions 15 to the sensing unit 11 when the touch input T, the pressure input P, and the movement input are performed in the reference position S or the first and the second directing positions D1 and D2.

### First Direction Input

As illustrated in FIG. 3, the reference position S that can be displaced and the plurality of first directing positions D1 spaced from the reference position S and arranged around the reference position S in a radial direction are displayed on the input unit 10 according to the present invention. At this time, the input unit 10 is provided in the input region 50 of the terminal for an electronic apparatus and the input region 50 includes the sensing unit for sensing the operation of a finger. Therefore, in the input unit 10, the touch input T or the pressure input P that is the first direction input is performed in accordance with the touch or the pressure of the finger to the reference position S and the first directing positions D1 so that the first data corresponding to the input is input. That is, the first direction input is divided into the touch input T and the pressure input P performed in the first directing positions to be performed independent of each other.

In detail, regarding the first directing positions D1, as illustrated in (a) of FIG. 3, data assigned to each of the directing positions D1 may be input by the touch input T performed in each of the directing positions D1. In addition, as illustrated in (b) of FIG. 3, data assigned to each of the directing positions may be input by the pressure input P performed in the directing positions D1.

At this time, the data assigned to the contact input T in the directing positions D1 and the data assigned to the pressure input P in the directing positions D1 may be differently arranged. Therefore, when data are input in the directing positions D1 by the touch input T and the pressure input P, since two data can be input in the same directing position D1, an input capacity may increase twice.

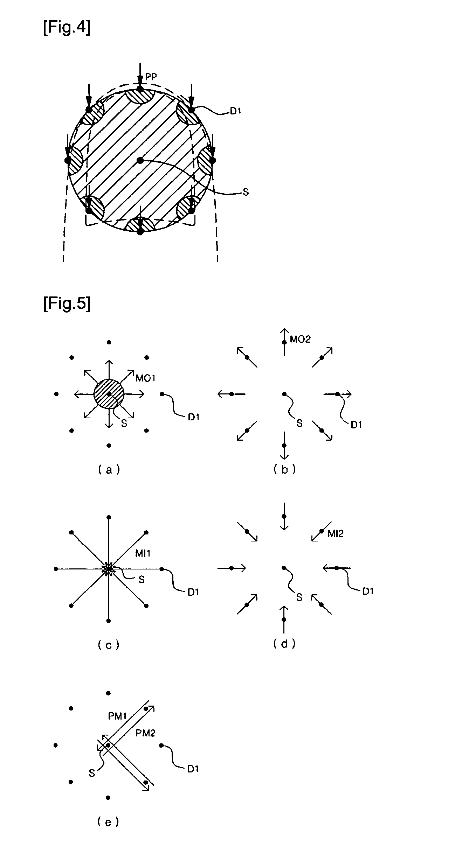

Another form of the first direction input may be a vertical pressure input illustrated as in FIG. 4.

According to the present invention, the vertical pressure input PP means that, when the reference position S and the first directing positions D1 are provided within the range of one finger, the finger is put on one of the first directing positions D1 or the reference position S and the whole of the first directing positions D1, and then, one of the first directing positions D1 is vertically pressed so that the first data assigned to the first directing position D1 are input.

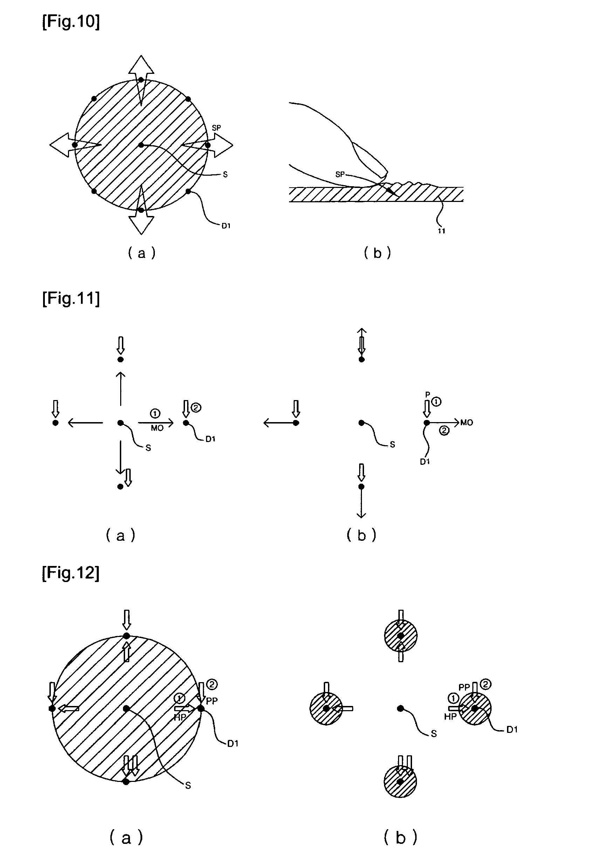

That is, in the vertical pressure input PP, as illustrated in FIG. 4, the finger is put on the reference position S and the first directing positions D1, and then, the pressure input P is performed in the first directing positions D1 to input the data assigned to the first directing positions D1 and, as illustrated in (b) of FIG. 12, the finger is put on the specific first directing position D1, and then, the pressure input P is performed in the corresponding first directing position D1 to input the data assigned to the first directing position D1.

During the vertical pressure input PP, only the specific first indicating position D1 is intentionally pressed to input data with almost no movement of the finger. At this time, the multi-step vertical pressure input PP may be provided in accordance with the strength of pressure.

### Movement Input

On the other hand, according to the present embodiment, as illustrated in FIG. 3, data may be not only input by the contact input T or the pressure input P performed in the first directing positions D1 in a state with no movement, but also input by the touch or the pressure movement of the finger applied to the reference position S and the first directing positions D1. That is, according to the present embodiment, 'a movement input' having a type, in which the second direction input performed by the touch or pressure movement of the finger from the first directing positions D1 to a radial specific position around the first directing positions is combined with the third direction input performed by the touch or pressure movement of the finger from the reference position to the first indicating positions, may be performed. The movement input is divided into a first outward movement input, a second outward movement input, a first inward movement input, a second inward movement input, a first penetrating movement input, and a second penetrating movement input.

In detail, as illustrated in (a) of FIG. 5, the data assigned to the directing positions D1 may be input by the first outward movement input MO1, in which movement is made toward one of the first directing positions D1 in a state where the reference position S is touched.

In addition, as illustrated in (b) of FIG. 5, the data assigned to the directing positions D1 may be input by the second outward movement input MO2, in which movement is made outward toward one of the first directing positions D1 in a state where the reference position S is not touched.

In addition, as illustrated in (c) of FIG. 5, the data assigned to the directing positions D1 may be input by the first inward movement input MI1, in which movement is made until the reference position S is touched from one of the first directing positions D1.

In addition, as illustrated in (d) of FIG. 5, the data assigned to the directing positions D1 may be input by the second inward movement input MI2, in which movement is made inward until the reference position S is touched from one of the first directing positions D1.

On the other hand, as illustrated in (e) of FIG. 5, the data may be input by the movement input M, in which movement is made from the specific first directing position D1 through the reference position S. At this time, the movement input M may be divided into a first penetrating movement input PM1, in which the movement is made from the specific first directing position D1 through the reference position S, and a second penetrating movement input PM2, in which the movement is made to the specific first directing position D1 through the reference position S. Separate data may be input by the first penetrating movement input PM1 and the second penetrating movement input PM2.

At this time, the movement inputs MO1, MO2, MI1, MI2, PM1, and PM2 in (a) to (e) of FIG. 5 are determined in accordance with whether the reference position S is touched or penetrated and whether the movement is inward or outward. Therefore, separate data may be respectively input by the movements that are made in a pair of the reference position S and the first directing position D1 in accordance with (a) to (e) of FIG. 5. By doing so, the data that may be input to the pair of reference position S and the first directing position D1 may increase six times.

In addition, the movement inputs MO1, MO2, MI1, MI2, PM1, and PM2 in (a) to (e) of FIG. 5 may be multi-step input processed in accordance with the length of the movement distance and the strength of the pressure. For example, when the first outward movement input M01 in (a) of FIG. 5 starts from the reference position S and reaches the first directing position D1 or ends before reaching the first directing position D1, "┐" is input (the movement distance is short). When the first outward movement input M01 ends after passing through the first directing position D1 (the movement distance is long), " 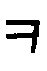 " is input. In addition, when the first outward movement input MO1 in (a) of FIG. 5 moves in a state of touching the reference position S (the touch input T) and moves in a state of pressing the reference position S (the pressure input P), different data may be input.

### Second Direction Input

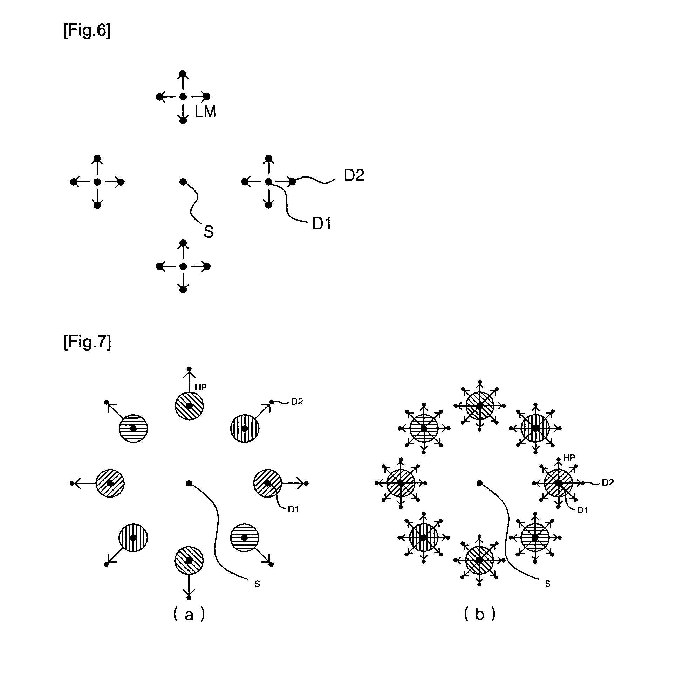

The second direction input means that movement is made in a state of performing touch or pressure toward at least one second directing positions D2 spaced from the first directing positions D1 and arranged around the first directing positions D1 in a radial direction. The second direction input may be realized as illustrated in FIGs. 6 and 7.

In detail, as illustrated in FIG. 6, the plurality of second directing positions D2 spaced from the first directing positions D1 and arranged around the first directing positions D1 in a radial direction may be provided. In the second directing positions D2, data assigned to the second directing positions D2 may be input by the outward movement input MO, in which outward movement is made from the first directing positions D1 to the second directing positions D2. At this time, the second direction input may be performed by the touch input T or the pressure input P, in which the second directing positions D2 are touched or pressed.

The sensing unit generates an input signal according to the second direction input performed in the second directing positions D2. The controller extracts second data corresponding to the input signal from the memory to input the second data.

In addition, the second direction input may be performed in the form of a horizontal pressure input. That is, in the horizontal pressure input HP, as illustrated in (a) of FIG. 7, a finger is put on one of the first directing positions D1 and the corresponding first directing position D1 is pressed outward to input the data assigned to the first directing positions D1 or the second directing positions D2.

At this time, during the horizontal pressure input HP, while the finger touches the touch surface of the input unit 10, the finger presses the touch surface of the input unit 10 in a horizontal direction. The horizontal pressure input HP may be provided in multi-step in accordance with the strength of the horizontal pressure.

In addition, in the horizontal pressure input HP, as illustrated in (b) of FIG. 7, when the plurality of second directing positions D2 are provided around each of the first directing positions D1, the finger is put on each of the first directing positions D1 and the horizontal pressure is performed toward the second directing positions D2 so that the data assigned to the second directing positions D2 may be input.

### Third Direction Input

The third direction input means that touch or pressure movement is made from the reference position to the first directing positions. In addition, the third direction input may be performed by lean movement or slope pressure from the reference position to the first directing positions.

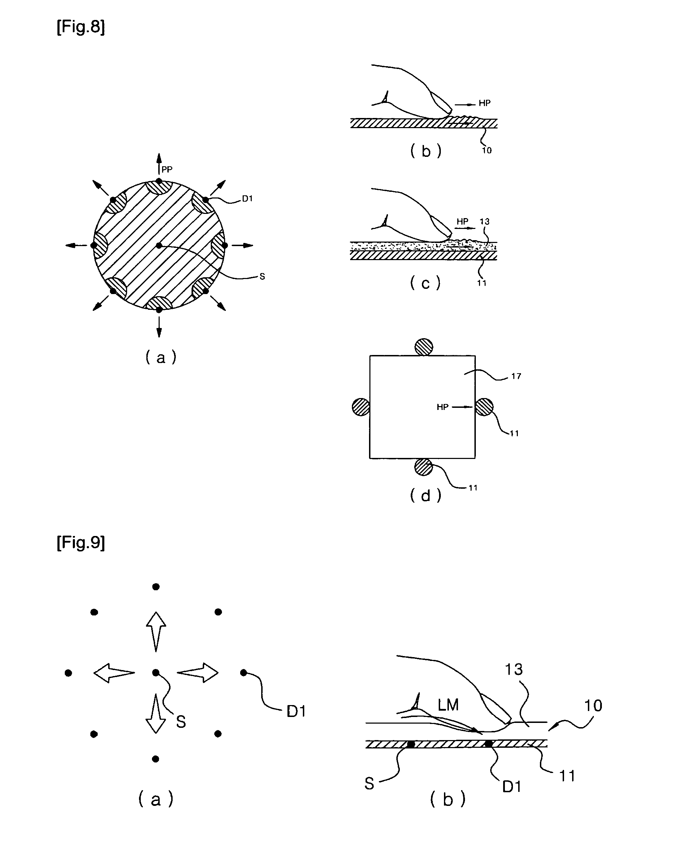

In detail, the third direction input may be performed in the form of the horizontal pressure input HP. That is, in the horizontal pressure input HP, as illustrated in (a) of FIG. 8, a finger is put on the reference position S and the first directing positions D1 and horizontal pressure is performed toward the first directing positions D1 so that the data assigned to the first directing positions D1 are input.

### (b) to (d) of FIG. 8 illustrate the horizontal pressure input HP.

Description is made in detail with reference to the drawings. As illustrated in (b) of FIG. 8, when pressure is made by a finger in the horizontal direction, the input unit 10 contracts by the pressure applied to the input unit 10 and senses the degree of contraction to generate the input signal in accordance with the horizontal pressure input HP.

In addition, as illustrated in (c) of FIG. 8, when the return unit 13 is provided on the sensing unit 11 such as a pressure sensing pad to constitute the input unit 10, the sensing unit 11 senses the horizontal pressure of the finger to generate the input signal in accordance with the horizontal pressure input HP. At this time, the return unit 13 is made of an elastic material to return to an original state when the horizontal pressure input HP is stopped.

As illustrated in (d) of FIG. 8, the input unit 10 may include a moving unit 17 that moves in accordance with the horizontal pressure of the finger and the sensing units 11 arranged around the moving unit 17. At this time, the sensing unit 11 may be provided in the positions corresponding to the first directing positions D1, however, may be provided in four directions as illustrated in the drawing.

When the sensing units 11 are provided in the four directions, inputs of eight directions may be sensed by the sensing unit 11. For example, during the horizontal pressure input HP in a one o'clock direction, the sensing unit 11 in a 12 o'clock direction and the sensing unit 11 in a three o'clock direction sense the movement of the moving unit 17 to grasp the movement of the moving unit 17 not as an input in the 12 o'clock direction or the three o'clock direction but as an input in the one o'clock direction.

At this time, the return unit 13 may be provided in the input unit 10. The return unit 13 is provided on the moving unit 17 so that the moving unit 17 minutely moves by horizontally pressing the return unit 13.

On the other hand, the third direction input may be realized in the form of the lean movement input.

In detail, in (a) of FIG. 9, arrows move outward so that pressure increases. In (b) of FIG. 9, a finger moves from the reference position S to a specific first directing position D1 to increase pressure.

As illustrated in the drawings, during the movement input performed in the first directing positions D1, data may be input by the movement of increasing the strength of the pressure applied to an initial touch point while performing outward movement. The input, in which the pressure increases while making the movement, is defined as a lean movement input (LM).

In the lean movement input LM, the pressure increases while making movement from the reference position S to the first directing positions D1. The lean movement input LM is distinguished from the slope pressure input SP to be described hereinafter. That is, the slope pressure input SP means an input to increase pressure in the outward direction of the first directing positions D1 in a state where the finger is put on the reference position S and the whole of the first directing positions D1.

On the other hand, the third direction input may be realized in the form of the slope pressure input. That is, in the slope pressure input SP according to the present invention means that, when the reference position S and the first directing positions D1 are provided within a one finger range, the data assigned to the first directing positions D1 are input by putting the finger on the reference position S and the first directing positions D1 and by increasing the pressure applied to one of the first directing positions D1.

The slope pressure input SP is similar to the lean movement input LM illustrated in FIG. 9. A difference between the slope pressure input SP and the lean movement input LM lies in that the slope pressure input SP is performed in the state where the finger is put on the reference position S and the first directing positions D1 as illustrated in FIG. 10. Since the slope pressure input SP is distinguished from the lean movement input LM in accordance with whether the input, in which the pressure is increased toward the first directing positions D1, is performed by putting the finger on the reference position S and the first directing positions D, it is possible to increase the input capacity by such a division.

### Combination Input

The above-described inputs are continuously performed so that data different from the data assigned to the inputs may be input. Whether at least two inputs are separately performed or are combined with each other to be performed may be set by the time period, by which the at least two inputs are performed. That is, when the at least two inputs are performed within a set time range, it is determined as a combination input so that data different from the data to be input by the above-described inputs are input.

FIGs. 11 to 13 illustrate combination inputs according to the present invention. The inputs are not divided into the first to the third direction inputs but are divided into the above-described types (for example, the touch input, the pressure input, and the movement input, etc.).

Referring to the drawings, in (a) of FIG. 11, the outward movement input MO (①) and the pressure input P (②) that are performed in the first directing positions D1 are combined with each other. After the outward movement input MO (①) is performed, the pressure input P(②) is performed so that data different from the data input by the outward movement input MO and the pressure input P may be input.

For example, when "┐" is input by the outward movement input MO in the three o'clock direction and "├" is input by the pressure input P performed in the first directing position D1 in the three o'clock direction," 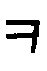 " may be input by the combination input of the outward movement input MO and the pressure input P.

In addition, in (b) of FIG. 11, a combination input of performing the outward movement input MO (②) after performing the pressure input P (①) to the first directing positions D1 is illustrated. Data different from the data input by the pressure input P and the outward movement input MO may be input by such a combination input.

Although not shown in the drawing, the pressure input P and the inward movement input MI may be combined with each other, the touch input T and the pressure input P may be combined with each other, and the inward movement input MI and the outward movement input MO may be combined with each other. In addition, the pressure input P, the inward movement input MI, and the outward movement input MO may be combined with each other so that new data may be input.

Then, FIG. 12 illustrates a type in which the horizontal pressure input HP and the vertical pressure input PP are combined with each other. That is, in (a) of FIG. 12, after performing the horizontal pressure input HP (①) in a state where a finger is put on the reference position S and the first directing positions D1, the vertical pressure input PP (②) is performed so that data different from the data input by the horizontal pressure input HP and the vertical pressure input PP may be input.

In addition, in (b) of FIG. 12, the horizontal pressure input HP (①) and the vertical pressure input PP (②) are continuously input in a state where the first directing positions D1 are touched.

At this time, in FIG. 12, after performing the horizontal pressure input HP, the vertical pressure input PP is performed. However, after performing the vertical pressure input PP, the horizontal pressure input HP may be performed.

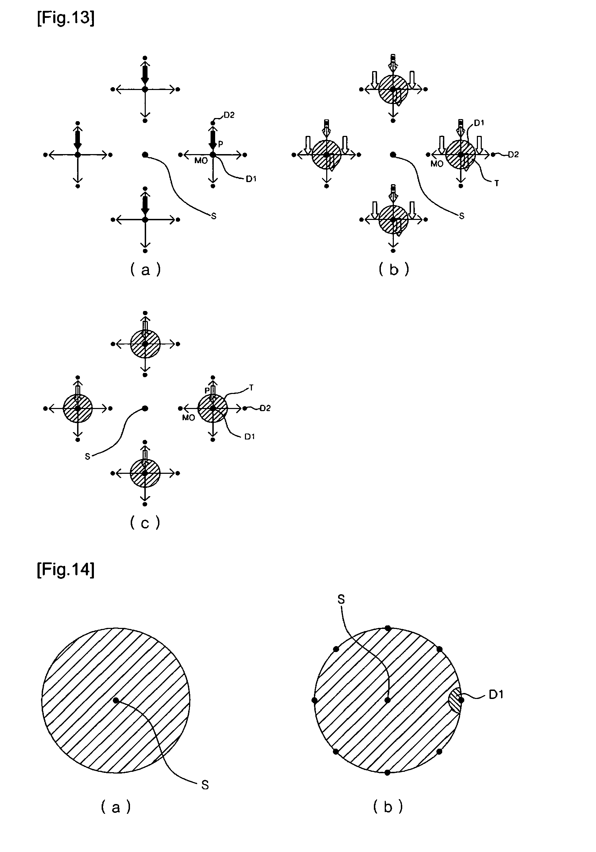

On the other hand, FIG. 13 illustrates a combination input in the case where the second directing positions D2 are provided around each of the first directing positions D1 in a radial direction. That is, in (a) of FIG. 13, after performing the pressure input P in the first directing positions D1, the outward movement input MO is performed toward the second directing positions D2 so that data different from the data input by the pressure input P and the outward movement input MO may be input.

In addition, in (b) of FIG. 13, after a finger is put on the first directing positions D1 (that is, the touch input T is performed in the first directing positions D1) and the outward movement input MO is performed toward the second directing positions D2, the pressure input P is performed in the second directing positions D2. Data different from the data input by separately performing the three inputs may be input by performing such a combination of the three inputs.

In (c) of FIG. 13, a finger is put on the first directing positions D1 (that is, the touch input T is performed in the first directing positions D1) and, in a state of performing the pressure input P in the first directing positions D1, the outward movement input MO is performed toward the second directing positions D2.

### Setting Reference Position and First Directing Positions

FIG. 14 illustrates a method of setting the reference position S when a finger is put on the reference position S and the first directing positions D1 to perform an input and a method of dividing inputs performed in the first directing positions D1.

That is, according to the present invention, the reference position S may be displaced so that the reference position S may be moved to the position on which the finger is currently put. When the finger is put on the input unit 10, since a uniform circular touch cannot be performed due to the characteristic of the finger and it is not possible to have the center of the finger coincide with the reference position S displayed in the input unit 10, it is important to an input where the reference position S is positioned.

As illustrated in (a) of FIG. 14, when a finger is put on the input unit 10 (refer to the oblique lined circle of (a) of FIG. 14), the input unit 10 grasps the contacted area of the finger put on the input unit 10. The center portion is grasped from the contact area so that the center portion is determined as the reference position S.

When the reference position S displayed on the input unit 10 is different from the reference position S determined through the contact area, the position is displaced to the reference position S determined through the touch area because the reference position S according to the present invention can be changed.

When the reference position S is determined, the plurality of first directing positions D1 are provided in the points spaced from the reference position S in a radial direction. If necessary, the second directing positions D2 are provided around each of the first directing positions D1.

In (b) of FIG. 14, a method of determining a specific first directing position D1 when the vertical pressure input PP or the horizontal pressure input HP is performed in the first directing positions D1 in a state where a finger is put on the input unit 10 is illustrated.

That is, when the vertical pressure input PP or the horizontal pressure input HP is performed, pressure is applied to the specific first directing position D1. At this time, it is determined that the vertical pressure input PP or the horizontal pressure input HP is performed in the first directing position D1 corresponding to the part, to which the strongest pressure is applied, among the first directing positions D1. Or it is determined to which first directing position D1 the vertical pressure input PP or the horizontal pressure input HP is performed based on the area, to which pressure is applied.

### Others

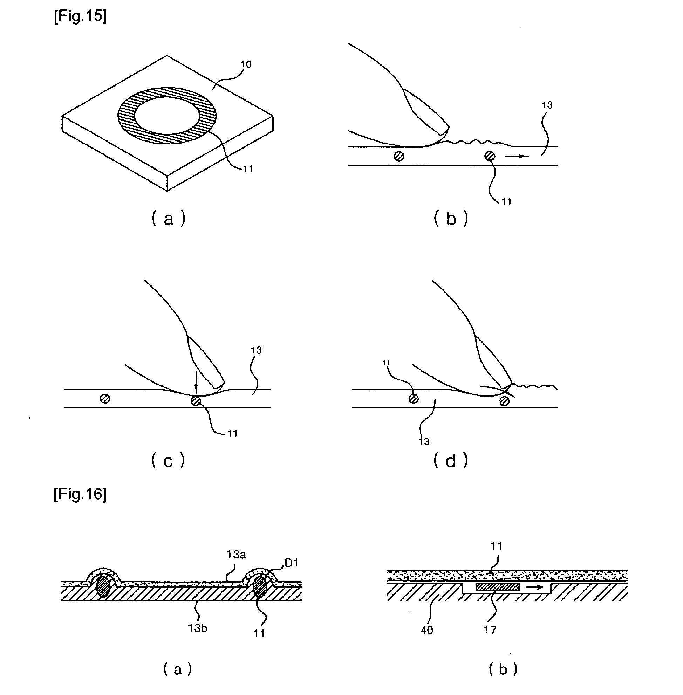

As described above, the data input device according to the present invention may be used for an apparatus that can sense touch or pressure in the input region 50 such as a touch screen. However, the data input device may be formed of another apparatus if the movement, the pressure, or the inclination of the finger may be sensed. An example of such an apparatus is illustrated in FIG. 15.

That is, as illustrated in (a) of FIG. 15, a ring-shaped sensing unit 11 may be provided in the input unit 10. The sensing unit 11 may sense the movement, the pressure, and the inclination of the finger on the input unit 10. At this time, the sensing unit 11 is positioned within the return unit 13 to return to an original state when the movement, the pressure, and the inclination of the finger are stopped.

In detail, as illustrated in (b) of FIG. 15, when the finger is moved on the return unit 13, the return unit 13 is pushed to one side so that the ring-shaped sensing unit 11 positioned within the return unit 13 is pushed. At this time, the entire sensing unit 11 is not moved but only the sensing unit 11 positioned in the direction where the finger is moved is pushed by the return unit 13 to be moved in the corresponding direction.

The sensing unit 11 senses such a horizontal movement to grasp that the movement input M is performed in the first directing position D1 corresponding to the direction of the movement and to generate an input signal so that data corresponding to the corresponding movement input M are input.

In addition, as illustrated in (c) of FIG. 15, when one point on the ring-shaped sensing unit 11 is pressed, the sensing unit 11 in the corresponding point is pushed downward. At this time, the sensing unit 11 senses such a downward movement to grasp that the pressure input P is performed in the first directing position D1 by the movement and to generate an input signal so that the data corresponding to the pressure input P are input.

As illustrated in (d) of FIG. 15, when one point on the ring-shaped sensing unit 11 is diagonally downward pressed, the sensing unit 11 of the corresponding point is pushed diagonally downward. At this time, the sensing unit 11 senses such a diagonal downward movement, that is, the lean movement to grasp that the lean movement input LM or the slope pressure input SP is performed in the first directing positions D1 by the movement and to generate an input signal so that the data corresponding to the lean movement input LM or the slope pressure input SP are input.

In addition, as a modification of FIG. 15, the input unit may be formed as illustrated in FIG. 16. That is, as illustrated in (a) of FIG. 16, two return units 13a and 13b are laminated and the sensing unit 11 is provided in the return unit 13b in the lower end so that the movement input M toward the first directing positions D1 and the vertical pressure input PP of pressing the first directing positions can be sensed. At this time, since the surface of the input unit protrudes due to the sensing unit, a user can feel a sense of input when a direction input is performed so that the user may correctly input data with the feel.

In addition, as illustrated in (b) of FIG. 16, the input unit includes the sensing unit 11 provided on the surface to return and the moving unit 17 provided under the sensing unit 11 to be horizontally moved, and thus, the direction inputs may be performed. At this time, the movement of the moving unit 17 is not sensed by the sensing unit 11. However, the moving unit 17 moves together when the finger moves on the sensing unit 11 so that the user may feel the sense of movement or the sense of input.

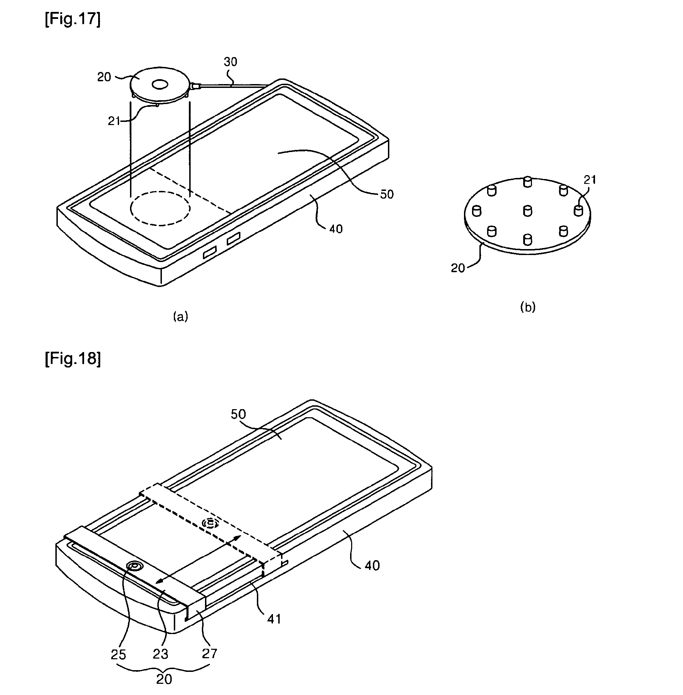

On the other hand, the data input device according to the present invention may further include an input instrument unit 20 to easily input data by the input unit 10. An example of the input instrument unit 20 is illustrated in FIGs. 17 and 18.

In detail, as illustrated in (a) of FIG. 17, when the data input device according to the present invention is mounted in a portable mobile communication terminal, the input instrument unit 20 is coupled using a coupling member 30 such as a string made of various materials so that the input instrument unit 20 may be put on the input region 50 such as the touch screen to be used only when data are input. Then, the coupling member 30 is coupled to a base 40.

At this time, as illustrated in (b) of FIG. 17, on the back bottom surface of the input instrument unit 20, protrusions 21 are provided in the parts corresponding to the reference position S and the first directing positions D1. When the back bottom surface of the input instrument unit 20 is put on the touch screen, the input unit 10 senses the protrusions 21 of the input instrument unit 20 to grasp that the reference position S is positioned at the central protrusion 21 and that the first directing positions D1 are positioned at the peripheral protrusions 21. Therefore, when the inputs are performed in the reference position S and the first directing positions D1 on the input instrument unit 20, such input operations are transmitted to the input unit 10 so that the input unit 10 generates input signals corresponding to the inputs.

Here, it is desirable that the input instrument unit 20 is made of an elastic material so that the inputs may be easily performed in the reference position S and the directing positions D1.

On the other hand, in FIG. 18, the input instrument unit 20 may include a belt-shaped main body 23, an accommodating unit 25 provided in the main body 23 so that inputs may be performed by the input unit 10, and movement supporting units 27 provided at both ends of the main body 23 and coupled with slide grooves 41 formed in the base 40 to slide.

In this case, while the input instrument unit 20 moves along the base 40, the input instrument unit 20 moves to the input region 50 on the touch screen. The protrusions 21 as illustrated in (b) of FIG. 17 are formed on the bottom of the accommodating unit 25 and are formed of an elastic material so that the input operations performed in the accommodating unit 25 can be correctly transmitted to the input unit 10.

### <Second Embodiment>

Then, the second embodiment of the data input device according to the present invention will be described. According to the present embodiment, a first input unit and a second input unit are provided in the form of a key. However, like in the first embodiment, the first input unit and the second input unit may be in the form of a touch pad or a touch screen.

### Basic Constitution

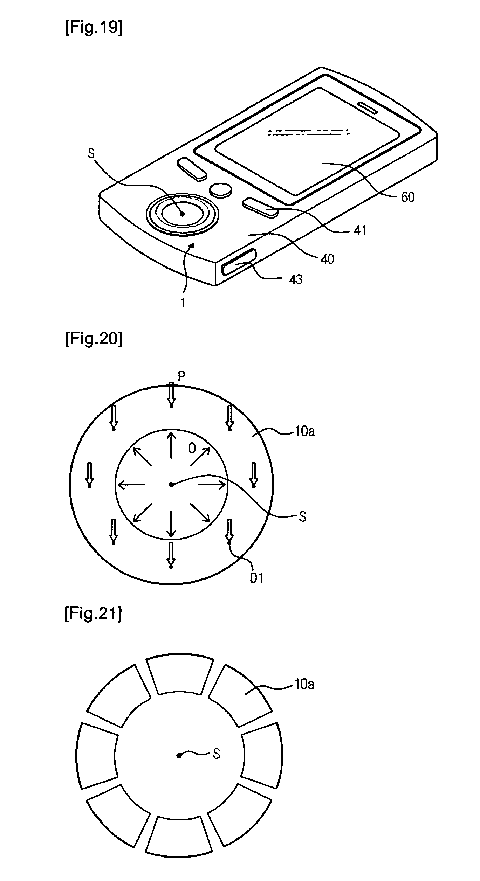

FIG. 19 is a perspective view illustrating an example of a terminal for an electronic apparatus, in which a data input device according to a second embodiment is mounted.

The terminal for an electronic apparatus may be a mobile telephone or a personal digital assistant (PDA) and may be a universal serial bus (USB) device with a USB port that may be connected to a laptop or a computer. In FIG. 19, a mobile telephone as the terminal for an electronic apparatus is illustrated.

A base 40 and a display unit 60 are provided in the terminal for an electronic apparatus. The base 40 includes a data input device 1 according to the present invention, various functional keys 41, and a port 43.

The data input device 1 may be provided as illustrated in FIG. 19, however, is not limited to the above. The data input device 1 may be combined with buttons or keys that are currently used and may have various modified shapes.

### First Direction Input

As illustrated in FIGs. 20 to 25, a first input unit 10a includes a plurality of first directing positions D1 spaced from the reference position S and arranged around the reference position S in a radial direction. At this time, since the first input unit 10a is illustrated to be ring-shaped, the first directing positions D1 are arranged along the ring-shaped first input unit 10a by a uniform distance.

According to the present embodiment, the eight directing positions D1 are provided. However, the number of first directing positions is not limited to eight. That is, the number of first directing positions may be four, five, six, or no less than nine.

The first direction input P may be performed in the first directing positions D1 by pressure. At this time, the first direction input P is to vertically press the directing positions. The first direction input P may be performed in a full vertical direction or in a state where inclination is made within the range that may be distinguished from a second direction input O to be described hereinafter.

### Second Direction Input

A second direction input may be performed in the form of an outward input O, in which pressure is applied to the first directing positions D1 from the reference position S to the outside of the first directing positions. The outward input O may be performed by applying pressure from the inside of the first input unit 10a to the outside and may be performed by putting a finger on the first input unit 10a to press the first input unit 10a to the outside.

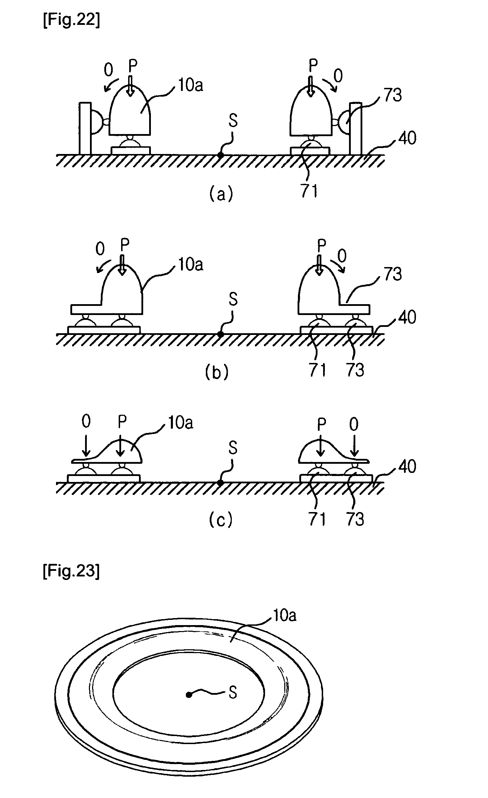

On the other hand, the first input unit 10a may be integrated or may be separated into respective directing positions. FIG. 21 illustrates the separated first input unit 10a. FIG. 23 illustrates the integrated first input unit 10a.

As illustrated in FIG. 21, the separated first input unit 10a is separated into the first directing positions, respectively, so that the first direction input P and the outward input O may be independently performed in the first directing positions D1. The first direction input P and the outward input O may be performed by the separated input unit 10a as illustrated in (a) to (c) of FIG. 22.

That is, as illustrated in (a) of FIG. 22, when the first direction input P is performed to the input unit 10a, a first sensing unit 71 senses pressure by the first direction input P so that the first data assigned to the first direction input P are extracted from a memory unit (not shown) to be input by a controller (not shown).

When the outward input O, in which the first input unit 10a is pressed outward, is performed, a second sensing unit 73 provided in the outside of the input unit 10a senses pressure by the outward input O so that second data assigned to the outward input O are extracted from the memory unit to be input by the controller. At this time, the outward input O is performed by inclining the first input unit 10a to the outside.

As illustrated in (b) of FIG. 22, the first input unit 10a may be provided to protrude to the outside. At this time, the first direction input P and the outward input O are performed by the same method as illustrated in (a) of FIG. 22.

In addition, as illustrated in (c) of FIG. 22, the first input unit 10a may be provided to be extended to the outside. In such a case, the outward input O is performed in the form of applying pressure on the top like in the first direction input P. However, unlike in the first direction input P, in which the first directing positions D1 are pressed, in the outward input O, the first input unit 10a extended to the outside of the first directing positions is pressed. At this time, since the first input unit 10a is provided lower than those of (a) and (b) of FIG. 22, the extended part of the first input unit 10a may be easily pressed going over the first directing positions.

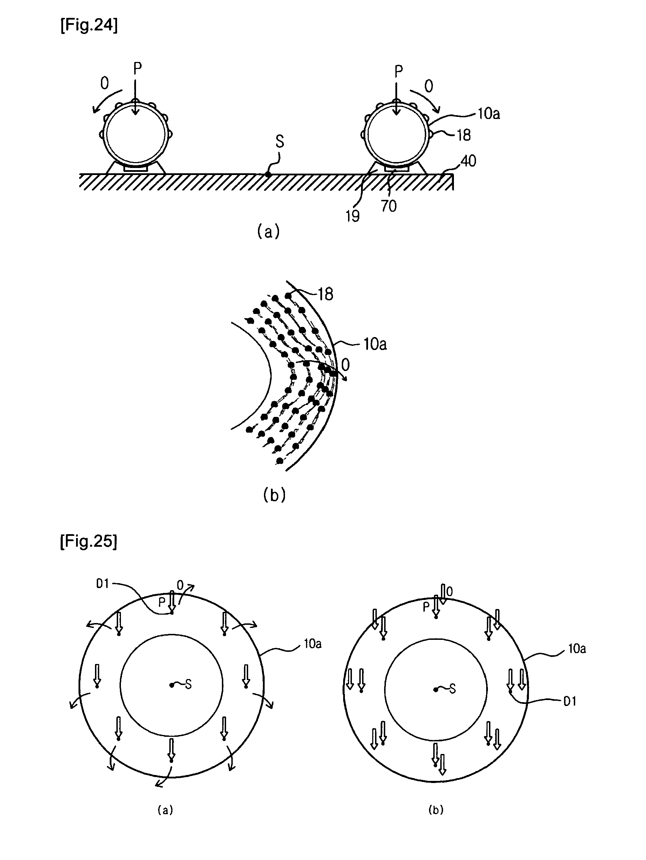

On the other hand, when the first input unit 10a is integrated as illustrated in FIG. 23, as illustrated in (a) and (b) of FIG. 24, the first direction input P is performed by the vertical pressure and the outward input O may be performed by the twisting of the first input unit 10a to the outside. At this time, a plurality of protrusions 18 or a material such as rubber having strong frictional force may be provided on the first input unit 10a so that a finger does not slide when the first input unit 10a is pushed to the outside. The first input unit 10a may be formed of an elastic material to return to an original sate when the finger is taken off in a twisted state. Here, pushing the first input unit 10a to the outside does not mean pressing in a horizontal direction but means twisting the first input unit 10a as if surrounding the first input unit 10a.

A supporting member 19 for supporting the first input unit 10a is provided below the first input unit 10a and a sensing unit 70 is provided on the upper portion of the supporting member 19. At this time, the sensing unit 70 is provided to distinguish the first direction input P from the outward input O and to sense the first direction input P and the outward input O. An optical sensor or a pressure sensor may be used as the sensing unit 70. In particular, the lower end of the first input unit is twisted with respect to the other parts of the first input unit by twisting the first input unit to the outside, which is sensed by the sensing unit 70 and considered to be the outward input.

The sensing unit 70 may be divided into a first sensing unit and a second sensing unit. At this time, the first sensing unit may sense pressure to sense the first direction input P and the second sensing unit senses touch movement caused by twisting to sense the outward input O.

In FIG. 20, the outward input is linear from the inside of the input unit to the input unit, which is merely for describing the concept of the outward input. The outward input may be realized by various inputs to the outside as described above.

That is, as illustrated in (a) and (b) of FIG. 22 and FIG. 24, when the outward input O is performed to press the first input unit to the outside or to incline or twist the first input unit, as illustrated in (a) of FIG. 25, the outward input O may be expressed as a line curved from the first directing positions to the outside of the first input unit.

In addition, as illustrated in (c) of FIG. 22, when the outward input O is formed to press the outside of the first input unit, as illustrated in (b) of FIG. 25, the outward input O may be expressed to press the radial outside of the first directing positions.

On the other hand, the second direction input may be performed by an inward input I, in which pressure is not applied outward but is applied inward toward the reference position S.

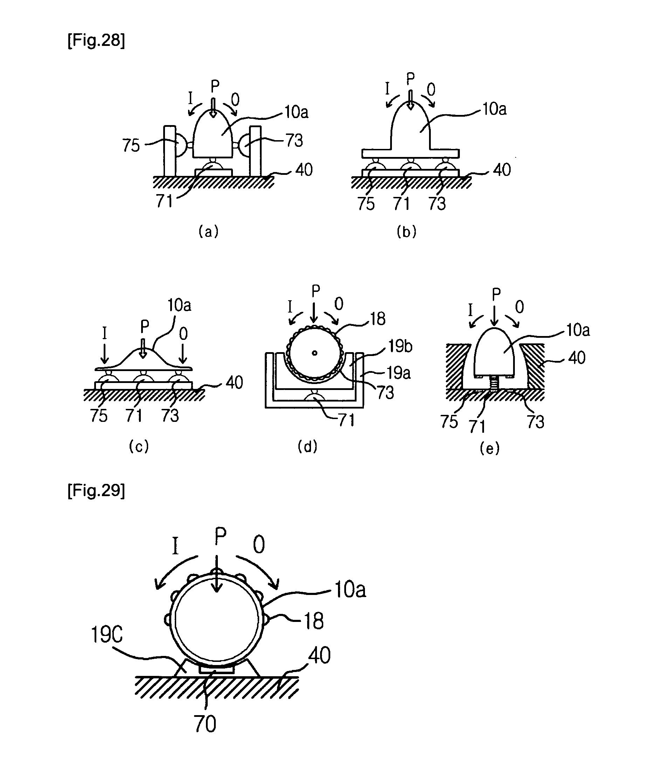

At this time, in the inward input I, the outside of the first input unit 10a may be pressed from the outside of the first input unit 10a and pressure may be applied from the top of the first input 10a to the reference position S. The inward input I is not necessarily performed by the pressure but may be performed by inclining the first input unit 10a to the inside (refer to the inward input I of FIG. 28).

In addition, according to the present embodiment, the first input unit 10a may be separated or integrated.

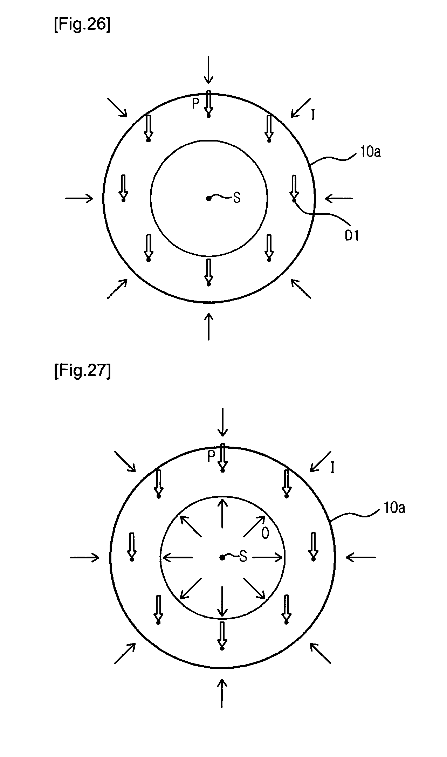

On the other hand, in FIGs. 27 to 31, the first direction input and the inward input and the outward input that are the second direction input are combined with each other. That is, the first direction input P is performed by the vertical pressure applied to the plurality of directing positions D1 spaced from the reference position S and arranged around the reference position S in a radial direction. The outward input O of the second direction inputs is performed by the pressure applied to the directing positions to the outside and the inward input I of the second direction inputs is performed by the pressure applied to the directing positions to the inside.

According to the present embodiment where the inputs P, O, and I may be performed, the first input unit 10a may be separated or integrated. That is, when the first input unit 10a is separated as illustrated in FIG. 21, the first input unit 10a may be realized as illustrated in FIG. 27.

In detail, as illustrated in (a) of FIG. 28, in the first input unit 10a, the first direction input P performed by the vertical pressure is sensed by the first sensing unit 71 and the outward input O and the inward third direction input I are sensed by second sensing units 73 and 75 respectively. At this time, the outward input O and the inward input I are performed while inclining the first input unit 10a and the inclinations of the outward input O and the inward input I are sensed by the sensing units 73 and 75 in the corresponding directions.

As illustrated in (b) of FIG. 28, the first input unit 10a may protrude to the inside and to the outside. At this time, the first direction input P performed by the pressure in the vertical direction is sensed by the first sensing unit 71 and the outward input O performed by outward inclination and the inward input I performed by inward inclination are sensed by the second sensing units 73 and 75.

In addition, as illustrated in (c) of FIG. 28, the first input unit 10a may be extended to the inside and to the outside. In this case, the outward input O and the inward input I may be performed by directly pressing the outside and the inside from the first directing positions D1. At this time, since the first input unit 10a as illustrated in (c) of FIG. 28 is lower than the first input unit 10a as illustrated in (a) and (b) of FIG. 28, the first direction input P performed by pressing the top of the first input unit 10a, the outward input O performed going over the first input unit 10a, and the inward input I performed inside the first input unit 10a may be smoothly performed.

As illustrated in (d) of FIG. 28, the first input unit 10a may be cylindrical. In this case, the protrusions 18 are formed on the external circumference of the first input unit 10a. The protrusions 18 prevent the finger from sliding when the first input unit 10a is rotated outward or inward and have the rotation of the first input unit 10a sensed by the sensing units 73 and 75.

In the first input unit 10a as illustrated in (d) of FIG. 28, supporting walls 19a for supporting the first input unit 10a may be provided. A settling unit 19b, in which the first input unit 10a is mounted, is provided between the supporting walls 19a. The first sensing unit 71 is provided between the setting unit 19b and the supporting walls 19a to sense the first direction input P when the settling unit 19b presses the first sensing unit 71 by the pressure of the first input unit 10a.

In addition, as illustrated in (e) of FIG. 28, in the first input unit, the first sensing unit 71 senses the first direction input P performed by vertical pressure and the second sensing units 73 and 75 sense the outward input O and the inward input I. At this time, the input unit illustrated in (e) of FIG. 28 is the same as the input unit as illustrated in (a) and (b) of FIG. 28 in that the outward input O and the inward input I are performed while inclining the first input unit 10a.

In the first input unit illustrated in (e) of FIG. 28, the bottom of the first input unit 10a is pressed or inclined in a state of being supported by an elastic body 19c such as a spring to touch the first and the second sensing units 71, 73, and 75 so that an input is performed. In the input unit illustrated in (a) and (b) of FIG. 28, the direction inputs are sensed by the sensing unit formed of a metal dome through an input unit. That is, in the first input unit as illustrated in (a) and (b) of FIG. 28, the sensing units may feel a sense of click during the direction inputs. However, in the first input unit as illustrated in (e) of FIG. 28, the direction inputs may be performed without the sense of click. Therefore, in the first input unit illustrated in (e) of FIG. 28, although the first input unit is not pressed or inclined until the sense of click is felt when the direction inputs are performed by the first input 10a arranged in a radial direction, the direction inputs may be rapidly performed by one finger.

On the other hand, when the first input unit 10a is the integrated-type as illustrated in FIG. 23, the direction inputs may be realized by the methods illustrated in FIGs. 29 to 31. That is, as illustrated in FIG. 29, the first input unit 10a is provided in the supporting member 19 provided on the base 40 so that the first and the second direction inputs P, O, and I may be performed by pressing and twisting the first input unit 10a. Therefore, on the supporting member 19, the sensing unit 70, which is for sensing the vertical pressure applied to the first input unit 10a and for sensing the twisting of the first input unit 10a so that the outward input O and the inward input I are sensed in accordance with the direction of the twisting, may be provided.

At this time, the first input unit 10a may further include a first sensing unit for sensing the first direction input P performed by the vertical pressure, a sensing unit for sensing only the outward input O by the twisting to the outside, and a sensing unit for sensing only the inward input I by the twisting to the inside.

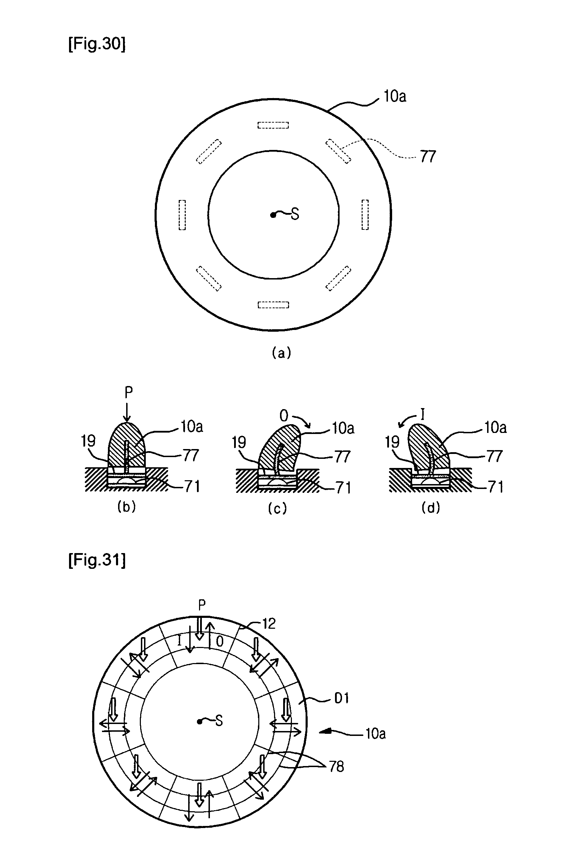

As illustrated in FIG. 30, the first input unit 10a is formed of an elastic material, the supporting member 19 having both sides supported by the base 40 is provided below the first input unit 10a, and the first sensing unit 71 for sensing the vertical pressure of the first input unit 10a is provided below the supporting member 19. A direction sensing unit 77, which is provided in the supporting member 19, is extended to the inside of the first input unit to be elastically transformed together with the first input unit 10a and to sense the transformed direction.

At this time, it is desirable that the first sensing unit 71 and the direction sensing unit 77 is provided only in the parts corresponding to the directing positions.

The first input unit illustrated in FIG. 30 is illustrated to be the integrated-type, however, may be the separated-type as illustrated in FIG. 28.

On the other hand, as illustrated in FIG. 31, the first input unit 10a may be a touch type. Two lines of sensing lines 78 that can sense the touch of the finger are provided in the first input unit 10a. When a finger touches the sensing lines 78 for the directing positions, it is grasped as the first direction input P. When the two lines of sensing lines 78 are sequentially touched while moving outward from the directing positions, it is grasped as the outward input O. When the two lines of sensing lines 78 are sequentially touched while moving inward from the directing positions, it is grasped as the inward input I. At this time, partitioning lines 12 for distinguishing the first directing positions are displayed on the first input unit 10a.

In FIG. 27, the outward input O is displayed as a straight line from the inside of the first input unit toward the first input unit and the inward input I is displayed as a straight line from the outside of the first input unit toward the first input unit, which is merely for describing the concepts of the outward input and the inward input. As illustrated in FIG. 25, the outward input O and the inward input I may be realized by above-described various outward or inward inputs.

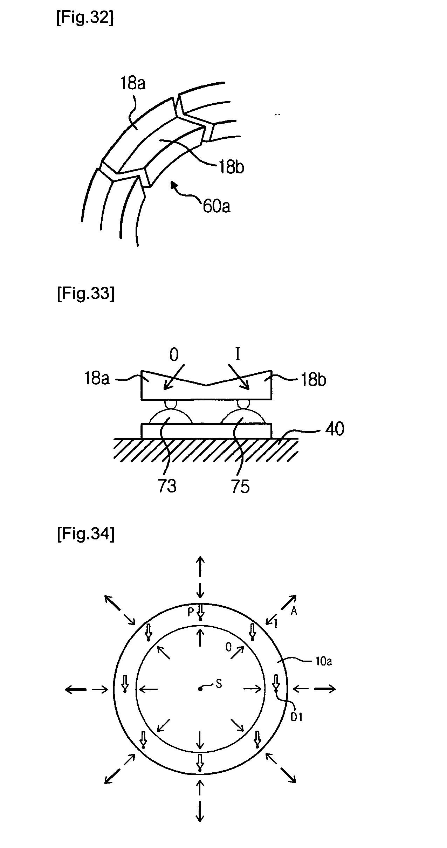

On the other hand, as illustrated in FIGs. 32 and 33, in the second direction input, protruding units 18a and 18b are provided on both sides of the first input unit 10a so that the outward input and the inward input may be performed by the pressure applied to the protruding units 18a and 18b. At this time, since a input performed in the right protruding unit 18a in FIG. 33 is performed by inclining the right protruding unit 18a or applying pressure to the right protruding unit 18a to the outside, the input may be the outward input O. Since a input is performed in the left protruding unit 18b by inclining or applying pressure to the left protruding unit 18b to the inside, the input may be the inward input I.

Therefore, according to the present embodiment, the direction inputs can be more correctly performed through the two inputs having opposite directions.

### Third Direction Input

Then, a third direction input performed by the data inputting apparatus according to the present invention will be described. According to the present embodiment, the third direction input may be divided into an entire movement input performed by the entire movement of the first input, the movement of the second input unit provided in the first input unit, a touch movement on the second input unit, and a center movement input performed by pressure.

First, among the third direction input, the entire movement input will be described.

In FIG. 34, the entire movement input A performed by the movement of the first input unit 10a itself is added to the first and the second direction inputs. That is, hereinafter, a type in which the entire movement input A is added to the first and the second direction inputs P, O, and I will be mainly described. However, the entire movement input A may be added to the first direction input and the outward inputs P and O and the first direction input and the inward inputs P and I respectively.

At this time, the entire movement input A may be sensed by a third sensing unit (not shown) provided outside the first input unit 10a. The first input unit 10a may be coupled to the base 40 by the elastic member to return to an original position after the entire movement input A is performed.

In addition, the entire movement input A, the outward input O, and the inward input I are discriminated by controlling the movement of the first input unit 10a itself through an additional key (not shown) provided outside the reference position S or the first input unit 10a. That is, when the additional key is selected, locking is released so that the first input unit 10a can be moved and that the entire movement input A can be performed by the movement of the first input unit 10a itself. When selection of the additional key is released, the first input unit 10a is locked so that the entire movement input A is not performed.

The entire movement input A may be performed by entirely pressing the second input unit 10b to be described hereinafter. That is, when the second input unit 10b is entirely pressed, it is grasped as a mode change to the entire movement input so that, when the second input unit is moved, the entire movement input may be performed.

According to the present embodiment, since the first to the third direction inputs P, O, I, and A can be performed and eight data can be input by each of the direction inputs, 32 data can be input. Therefore, 24 Korean alphabets or 26 English alphabets may be enough to be arranged and functions such as spacing, canceling, and confirmation can be further arranged.

Then, the center movement input will be described.

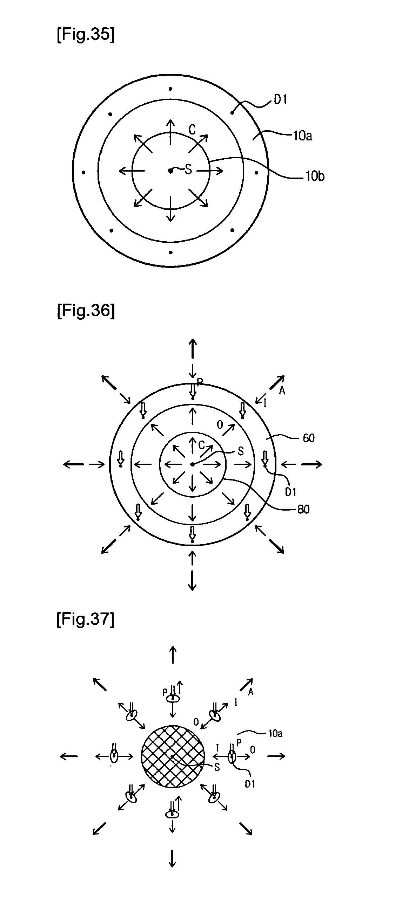

As illustrated in FIG. 35, according to the present embodiment, a second input unit 10b may be provided in the reference position S in addition to the first input unit 10a. The second input unit 10b may perform the center movement input C by applying pressure or making movement from the reference position S to the first directing positions D1. Therefore, as illustrated in FIG. 36, when the center movement input C is additionally performed in the first direction input, the second direction input, and the entire movement input, since 40 data can be input, it can be usefully used for increasing the capacity of data that may be input.

The center movement input C can function as a mouse. In this case, when the data input device 1 according to the present embodiment is used in the mode of a mouse, the movement of a mouse pointer is performed by the center movement input C and one or more among the first direction input, the second direction input, and the entire movement inputs P, O, I, and A can be used as the left/right buttons of a mouse and a scroll button.

In addition, the center movement input may be used for moving a character during a game. At this time, one or more among the first direction input, the second direction input, and the entire movement inputs P, O, I, and A may be used for inputting various commands for the character.

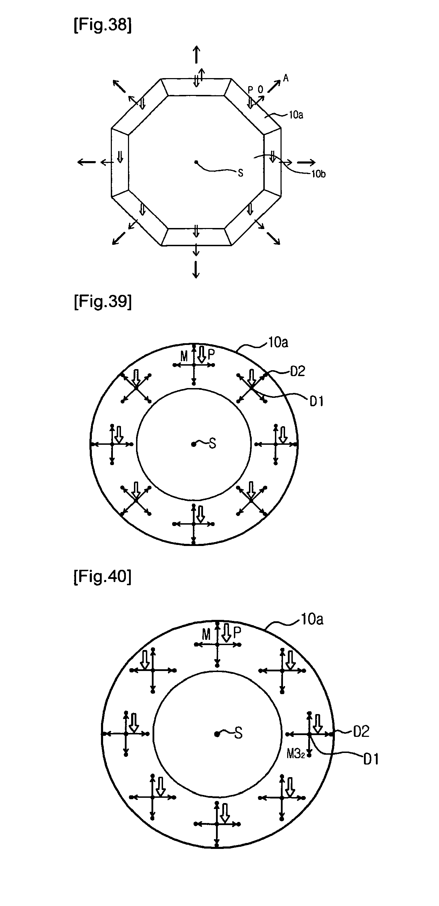

Among the above-described third direction inputs, the entire movement input A may be realized in the forms as illustrated in FIGs. 37 and 38. That is, as illustrated in FIG. 37, when the second input unit 10b is touched or pressed, the first input unit 10a and the second input unit 10b may be entirely moved toward the first directing positions D1. At this time, the first input unit 10a may be in the form of keys, however, may be realized in the forms of a touch pad or a touch screen for sensing touch or pressure, a touch sensor, and a pressure sensor so that the first direction input P and the second direction inputs O and I may be performed.

In addition, as illustrated in FIG. 38, when the second input unit 10b is pressed, the first input unit 10a and the second input unit 10b may perform the entire movement input A. At this time, in FIG. 38, the first input unit 10a may perform the first direction input P performed by pressure and the second direction input O performed by the movement to the outside. Here, in the second direction input O performed in the first input unit 10a, the second input unit 10b does not move but only the corresponding part of the first input unit 10a may be moved.

### Arrangement Patterns of First and Second Directing Positions

Then, changes in an input pattern obtained by variously arranging the first directing positions that are the basis of performing the above-described first direction input and the second directing positions that are the basis of performing the above-described second direction input will be described.

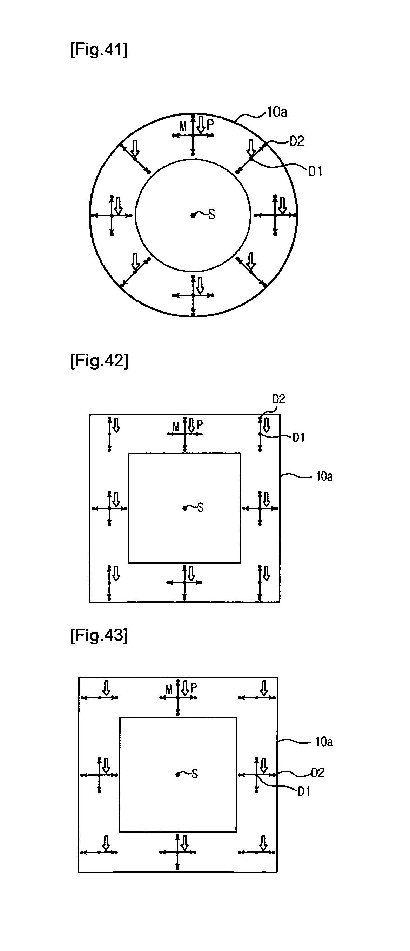

That is, as illustrated in FIGs. 39 to 46, according to the present embodiment, the plurality of first directing positions D1 and the plurality of second directing positions D2 spaced from the first directing positions D1 and arranged around the first directing positions D1 in a radial direction are provided. At this time, as illustrated in FIGs. 39 to 41, the first directing positions D1 may be spaced from the reference position S and arranged around the reference position S in a radial direction. As illustrated in FIGs. 42 to 46, the first directing positions D1 may be spaced from the reference position S and arranged in a square.

In detail, in FIG. 39, the eight first directing positions D1 are spaced and arranged in a radial direction and the four second directing positions D2 are arranged around each of the eight first directing positions. At this time, the second directing positions D2 are arranged in an inward direction toward the reference position S, in an outward direction opposite to the inward direction, and two circumferential directions at a right angle to the inward direction and the outward direction.

In the above, the movement convenience of a finger with respect to the reference position S is considered. A user can input the data assigned to the directing positions in accordance with the natural movement of the finger.

The first sensing unit 71 is provided in the first directing positions D1 and the second sensing unit 73 is provided in the second directing positions D2. Therefore, when the first directing positions are pressed, the pressure is sensed by the first sensing unit so that the first direction input is performed.

In addition, when the input unit is pressed or inclined toward the second directing positions, the pressure or the inclination is sensed by the second sensing unit 73 so that the second direction input M is performed. Here, according to the above-described embodiment, the second direction input is performed by pressing or inclining the input unit outward. However, according to the present embodiment, pressing or inclining the first input unit toward the second directing positions D2 is referred to as the second direction input M. That is, the second direction input M according to the present embodiment is used as a concept including the outward input O and the inward input I according to the above-described embodiment.

On the other hand, in FIG. 40, the second directing positions D2 are arranged around the first directing position D1 up and down and side to side. Therefore, since the second directing positions are arranged around the first directing positions in the same direction, the user may easily grasp the second directing positions.

In FIG. 41, the first directing positions are arranged in a radial direction like in FIG. 39. However, in the first directing positions in a diagonal direction, the second directing positions are arranged merely in inward and outward directions. In the first directing positions arranged around the reference position S up and down and side to side, the four second directing positions are arranged to perform the four second direction inputs M respectively. In the first directing positions arranged around the reference position S in a diagonal direction, the two second directing positions are arranged so that the two second direction inputs M are performed. In the first directing positions in a diagonal direction, the two second directing positions are arranged in the inward direction and the outward direction so that an input may be performed by the natural movement of the finger.

In FIGs. 42 to 46, the first directing positions D1 are arranged around the reference position S in a square and the two or four second directing positions D2 are arranged in each of the first directing positions.

In detail, in FIGs. 42 and 43, the four second directing positions are arranged around the reference position S in the first directing positions up and down and side to side and the two second directing positions are arranged in the first directing positions in a diagonal direction.

At this time, in FIG. 42, in the first directing positions in a diagonal direction, the second directing positions are arranged up and down so that the first input unit 10a is pressed or inclined to the corresponding second directing position and that the second direction input M may be performed.

In FIG. 43, in the first directing positions in a diagonal direction, the second directing positions are arranged side to side so that the first input unit 10a is pressed or inclined to the corresponding second directing position and that the second direction input M may be performed.

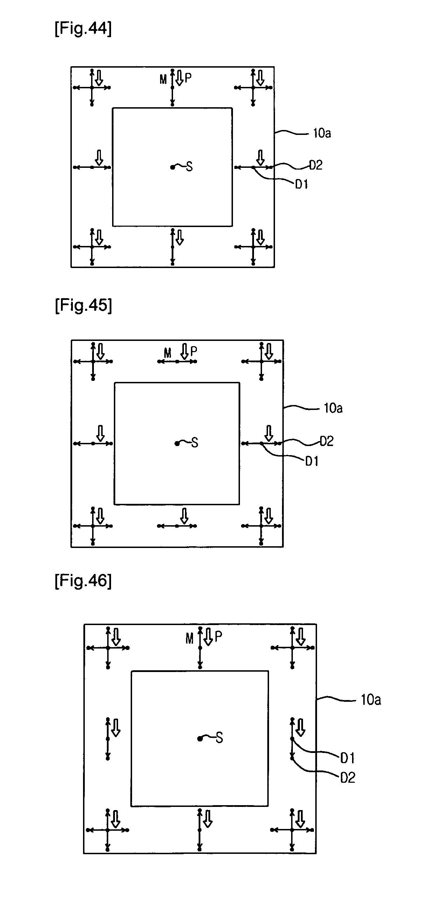

On the other hand, in FIGs. 44 to 46, the four second directing positions are arranged around the reference position S in the first directing positions in a diagonal direction and the two second directing positions are arranged in the first directing positions up and down and side to side.

In detail, in FIG. 44, the second directing positions are arranged in the first directing positions up and down and side to side in the inward and outward directions so that the first input unit 10a is pressed or inclined to the corresponding second directing position and that the second direction input M is performed.

In FIG. 45, in the first directing positions up and down and side to side, the second directing positions are arranged side to side so that the first input unit 10a is pressed or inclined to the corresponding second directing position and that the second direction input M may be performed.

In addition, in FIG. 46, in the first directing positions up and down and side to side, the second directing positions are arranged up and down so that the first input unit 10a is pressed or inclined to the corresponding second directing position and that the second direction input M may be performed.

At this time, in FIGs. 44 to 46, the four second directing positions are arranged in each of the first directing positions in a diagonal direction and the second directing positions are arranged around each of the first directing positions up and down and side to side. The second directing positions may be arranged around the first directing positions not up and down and side to side but in a diagonal direction.

The first input unit 10a as illustrated in FIGs. 39 to 46 described according to the present embodiment may be the separated-type as illustrated in FIG. 21 or may be the integrated-type as illustrated in FIG. 23. At this time, the separated or integrated first input unit may be realized as illustrated in FIGs. 28 to 31.

In addition, according to the present embodiment, as illustrated in FIG. 34, in the third direction input where the entire first input unit 10a is moved to the direction of the first directing positions, the entire movement input A may be performed. As illustrated in FIG. 35, the second input unit 10b is provided in the center of the first input unit 10a so that the center movement input C may be performed in the third direction input performed by the second input unit 10b. At this time, in the same method as the above-described embodiment, a mouse function may be performed by the center movement input C.

On the other hand, according to the present embodiment, in the patterns illustrated in FIGs. 39 and 40, the eight first direction inputs and the 32 second direction inputs can be performed so that 40 different data can be input. In the patterns illustrated in FIGs. 41 to 46, the eight first direction inputs and the 24 second direction inputs may be performed so that 32 different data can be input. Therefore, in the patterns illustrated in FIGs. 39 to 46, 26 English alphabets or 24 Korean alphabets can be all arranged in each of the directing positions and various functional keys (enter, spacing, canceling, confirmation, and mode change, etc.) can be further arranged in the remaining directing positions to be used.

When a mode cannot be assigned to the data to be input merely by the patterns illustrated in FIGs. 39 to 46, the entire movement input A and the center movement input C can be performed to increase the number of data that can be input. Therefore, the 40 data inputs by the types illustrated in FIGs. 39 and 40, the eight entire movement inputs, and the eight center movement inputs may be performed so that 56 different data can be input.

While this invention has been particularly shown and described with reference to preferred embodiments thereof, these embodiments are provided so that this disclosure will be thorough and complete, and will fully convey the concept of the invention to those skilled in the art. It will be understood by those skilled in the art that various changes in form and details may be made therein without departing from the spirit and scope of the invention as defined by the appended claims.

## Claims

1. A data input device comprising a predetermined sensing region in a terminal for an electronic apparatus, comprising:
an input unit for sensing at least one of touch and pressure applied to a reference position that can be displaced in the sensing region and a plurality of first directing positions arranged around the reference position in a radial direction to generate an input signal corresponding to the touch or the pressure; and
a controller for determining a touch or pressure point of a finger or a touch or pressure direction from the input signal to extract data assigned to the input signal from a memory unit and to input the extracted data.

2. The data input device of claim 1, wherein the input unit distinguishes a touch input and a pressure input applied to the reference position and the first directing positions to sense the touch input and the pressure input.

3. The data input device of claim 1, wherein the input unit distinguishes a first outward movement input, in which movement is made toward one of the first directing positions in a state of touching the reference position, a second outward movement input, in which one of the first directing positions is moved outward in a state where the reference position is not touched, a first inward movement input, in which movement is made from one of the first directing positions until the reference position is touched, and a second inward movement input, in which movement is inward made from the first directing positions to the inside until the reference position is touched, from each other to generate the input signal.

4. The data input device of claim 3, wherein, in addition to the movement inputs, the input unit distinguishes a first penetrating movement input, in which movement is made from the first directing positions through the reference position, from a second penetrating movement input, in which movement is made to the first directing positions through the reference position, to generate the input signal.

5. The data input device of claim 3, wherein the input unit distinguishes the movement inputs in a touch state from the movement inputs in a pressure state to generate the input signal.

6. The data input device of claim 5, wherein the input unit distinguishes a movement input performed within a pressure range set based on an initial pressure from a movement input, in which pressure beyond the set pressure range is applied in comparison with the initial pressure during movement, to generate the input signal.

7. The data input device of claim 1, wherein the input unit senses a touch input or a pressure input performed in second directing positions arranged around the first directing positions in a radial direction or a movement input performed toward the second directing positions to generate the input signal corresponding to the touch input, the pressure input, or the movement input.

8. The data input device of claim 1, wherein the reference position and the first directing positions are arranged within a range to be covered by a finger, and
wherein a vertical pressure input is performed by a vertical pressure applied to one of the first directing positions in a state where the finger is put on the input unit.

9. The data input device of claim 1, wherein the reference position and the first directing positions are arranged in a range to be covered by a finger, and
wherein a horizontal pressure input is performed by a horizontal pressure applied to one of the first directing positions in a radial direction in a state where the finger is put on the input unit.

10. The data input device of claim 1, wherein the input unit comprises:
a moving unit of moving by a horizontal pressure applied to one of the first directing positions by the finger put on the input unit; and
sensing units arranged in the first directing positions to sense movement of the moving unit to one of the first directing positions.

11. The data input device of claim 1, wherein the reference position and the first directing positions are arranged within a range that can be covered by a finger, and
wherein a slope pressure input is performed by a slope pressure applied to one of the first directing positions in a state where the finger is put on the input unit while increasing pressure in a radial direction.

12. The data input device of any one of claims 1 to 11, wherein the input signal is divided into at least two signals in accordance with whether movement is made within a set distance or whether pressure is applied within a set pressure range.

13. The data input device of any one of claims 1 to 11, wherein when two or more inputs are continuously performed in the first directing positions, a signal for inputting data different from the data according to each of the two or more inputs is generated.

14. The data input device of any one of claims 1 to 11, wherein the input unit comprises a sensing unit for sensing touch or pressure of a finger and a return unit made of an elastic material provided on the sensing unit to return to an original state when the touch or the pressure is released.

15. The data input device of claim 14, wherein the input unit further comprises a plurality of touch protrusions provided on a bottom surface of the return unit to transmit touch or pressure onto the return unit to the sensing unit.

16. The data input device of any one of claims 1 to 11, wherein the input unit comprises:
a moving unit of moving corresponding to pressure movement of a finger; and
sensing units provided in a plurality of radial points around the moving unit to sense the movement of the moving unit.

17. The data input device of any one of claims 1 to 11, wherein the input unit senses a touch area of a finger to transmit sensed information to the controller, and
wherein the controller grasps a center position of the touch area to determine the reference position and the first directing positions based on the center position.

18. The data input device of claim 17, wherein the input unit senses the touch part and the touch area of the finger to transmit the sensed information to the controller, and
wherein the controller determines that an input is performed in the first directing positions corresponding to the touch part and the touch area.

19. The data input device of any one of claims 1 to 11, wherein the input unit comprises:
a ring-shaped sensing unit, on which the first directing positions are provided; and
a return unit surrounding the ring-shaped sensing unit and transmitting touch or pressure of a finger to the ring-shaped sensing unit and made of an elastic material to return to an original state when the touch or the pressure is released.

20. The data input device of anyone of claims 1 to 11, further comprising an input instrument unit made of an elastic material, in which protrusions are formed at points corresponding to the reference position and the first directing positions of the input unit so that an input is easily performed in the reference position and the first directing positions of the input unit,
wherein the input instrument unit is coupled to the terminal by a coupling member.

21. The data input device of anyone of claims 1 to 11, wherein protrusions are formed at the points corresponding to the reference position and the first directing positions of the input unit so that the input is easily performed in the reference position and the first directing positions of the input unit, and
wherein an input instrument unit sliding from one side of the terminal to the sensing region of the terminal is further provided.

22. A data input device, comprising:
an input unit provided in a base of a terminal for an electronic apparatus to independently perform a first direction input, in which one of a plurality of directing positions spaced from a reference position and arranged around the reference position in a radial direction in a predetermined input radius is pressed, and a second direction input, in which one of the directing positions is pressed from the reference position to the outside;
a first sensing unit for sensing the first direction input;
a second sensing unit for sensing the second direction input; and
a controller for extracting first data assigned to the first direction input performed in the directing positions from a memory unit when the first direction input is sensed and for extracting second data assigned to the second direction input performed in the directing positions from the memory unit when the second direction input is sensed and for executing the first and the second data.

23. A data input device, comprising:
an input unit provided in a base of a terminal for an electronic apparatus to independently perform a first direction input, in which one of a plurality of directing positions spaced from a reference position and arranged around the reference position in a radial direction in a predetermined input radius is pressed, and a third direction input, in which one of the directing positions is inward pressed toward the reference position;
a first sensing unit for sensing the first direction input;
a third sensing unit for sensing the third direction input; and
a controller for extracting first data assigned to the first direction input performed in the directing positions from a memory unit when the first direction input is sensed and for extracting third data assigned to the third direction input performed in the directing positions from the memory unit when the third direction input is sensed and for executing the first and the third data.

24. A data input device, comprising:
an input unit provided in a base of a terminal for an electronic apparatus to independently perform a first direction input, in which one of a plurality of directing positions spaced from a reference position and arranged around the reference position in a radial direction in a predetermined input radius is pressed, a second direction input, in which one of the directing positions is pressed from the reference position to the outside, and a third direction input, in which one of the directing positions is inward pressed toward the reference position;
a first sensing unit for sensing the first direction input;
a second sensing unit for sensing the second direction input;
a third sensing unit for sensing the third direction input; and
a controller for extracting first data assigned to the first direction input performed in the directing positions from a memory unit when the first direction input is sensed, for extracting second data assigned to the second direction input performed in the directing positions from the memory unit when the second direction input is sensed, and for extracting third data assigned to the third direction input performed in the directing positions from the memory when the third direction input is sensed and for executing the first to the third data.

25. The data input device of anyone of claims 22 to 24, wherein the input unit may independently perform a fourth direction input, in which the entire input unit moves outward from the reference position to the directing positions, and
wherein the controller extracts fourth data assigned to the fourth direction input performed in the directing positions from the memory unit when the fourth direction input is performed and executes the fourth data.

26. The data input device of claim 25, wherein a center input unit for performing a fifth direction input, in which pressure or movement is made outward from the reference position toward the directing positions, is provided in the reference position.

27. The data input device of claim 26, wherein the controller extracts fifth data assigned to the fifth direction input performed in the directing positions from the memory unit when the fifth direction input is performed and executes the fifth data.

28. The data input device of claim 26, wherein a mouse function is performed by the fifth direction input.

29. The data input device of claim 28, wherein, in a mouse input mode, a mouse pointer is moved by the fifth direction input, and left and right buttons of a mouse or a scroll are manipulated by one or more of the first to the fourth direction inputs.

30. The data input device of claim 25, wherein the input unit is divided into the directing positions to be arranged in the form of a ring.

31. The data input device of claim 25, wherein the input unit is integrated to be ring-shaped.

32. The data input device of claim 31, wherein the input unit is made of an elastic material that can be twisted in the directing positions, and
wherein the second sensing unit or the third sensing unit senses the second direction input or the third direction input through a direction of twisting in the directing positions.

33. A data input device, comprising:
an input unit provided in a base of a terminal for an electronic apparatus to independently perform a first direction input, in which one of a plurality of directing positions spaced from a reference position and arranged around the reference position in a radial direction in a predetermined input radius is pressed, and a second direction input, in which the outside of one of the directing positions is pressed;
a first sensing unit for sensing the first direction input;
a second sensing unit for sensing the second direction input; and
a controller for extracting first data assigned to the first direction input performed in the directing positions from a memory unit when the first direction input is sensed and for extracting second data assigned to the second direction input performed in the directing positions from the memory unit when the second direction input is sensed and for executing the first and the second data.

34. A data input device, comprising:
an input unit provided in a base of a terminal for an electronic apparatus to independently perform a first direction input, in which one of a plurality of directing positions spaced from a reference position and arranged around the reference position in a radial direction in a predetermined input radius is pressed, and a third direction input, in which the inside of one of the directing positions is pressed;
a first sensing unit for sensing the first direction input;
a third sensing unit for sensing the third direction input; and
a controller for extracting first data assigned to the first direction input performed in the directing positions from a memory unit when the first direction input is sensed and for extracting third data assigned to the third direction input performed in the directing positions from the memory unit when the third direction input is sensed and for executing the first and the third data.

35. A data input device, comprising:
an input unit provided in a base of a terminal for an electronic apparatus to independently perform a first direction input, in which one of a plurality of directing positions spaced from a reference position and arranged around the reference position in a radial direction in a predetermined input radius is pressed, a second direction input, in which the outside of one of the directing positions is pressed, and a third direction input, in which the inside of one of the directing positions is pressed;
a first sensing unit for sensing the first direction input;
a second sensing unit for sensing the second direction input;
a third sensing unit for sensing the third direction input; and
a controller for extracting first data assigned to the first direction input performed in the directing positions from a memory unit when the first direction input is sensed, for extracting second data assigned to the second direction input performed in the directing positions from the memory unit when the second direction input is sensed, and for extracting third data assigned to the third direction input performed in the directing positions from the memory when the third direction input is sensed and for executing the first to the third data.

36. The data input device of anyone of claims 33 to 35,
wherein the input unit may independently perform a fourth direction input, in which the entire input unit moves outward from the reference position to the directing positions, and
wherein the controller extracts fourth data assigned to the fourth direction input performed in the directing positions from the memory unit when the fourth direction input is performed and for executing the fourth data.

37. A data input device, comprising:
an input unit provided in a base of a terminal for an electronic apparatus to independently perform a first direction input, in which one of a plurality of first directing positions spaced from a reference position and arranged around the reference position in a predetermined input radius is pressed, and a second direction input, in which movement is made to one of a plurality of second direction directing positions spaced from the first direction directing positions and arranged around the first direction directing positions in a radial direction;
a first sensing unit for sensing the first direction input;
a second sensing unit for sensing the second direction input; and
a controller for extracting first data assigned to the first direction directing positions from a memory unit when the first direction input is sensed and for extracting second data assigned to the second direction directing positions from the memory unit when the second direction input is sensed and for executing the first and the second data.

38. The data input device of claim 37, wherein the first direction directing positions are arranged around the reference position in a radial direction.

39. The data input device of claim 37, wherein the first direction directing positions are arranged around the reference position in a square.

40. The data input device of claim 38 or 39, wherein the second direction directing positions are arranged in two or more positions of the upper and lower sides and the right and left sides of the first direction directing positions.

41. The data input device of claim 38 or 39, wherein the second direction directing positions are arranged in two or more positions among the inward direction from the first direction directing positions to the reference position, the outward direction that is the opposite direction of the inward direction, and two circumferential directions at a right angle with respect to the inward direction and the outward direction.

42. The data input device of anyone of claims 37 to 39, wherein the input unit may independently perform a fourth direction input, in which the entire input unit moves outward from the reference position to the first direction directing positions, and
wherein the controller extracts fourth data assigned to the fourth direction input performed in the first direction directing positions from the memory when the fourth direction input is performed and for executing the fourth data.

43. The data input device of claim 42, wherein a center input unit for performing a fifth direction input, in which pressure or movement is applied outward from the reference position to the first direction directing positions, is provided in the reference position.

44. The data input device of claim 43, wherein the controller extracts fifth data assigned to the fifth direction input performed in the first direction directing positions from the memory when the fifth direction input is performed and for executing the fifth data.

45. The data input device of claim 44, wherein a mouse function is performed by the fifth direction input.
